# EUROPEAN PATENT APPLICATION

(11) **EP 4 554 317 A1**
(43) Date of publication of application: **14.05.2025**
(21) Application number: 23835371.8
(22) Date of filing: 27.06.2023
(51) Int. Cl.: H04W 76/14, H04W 84/12, H04W 92/18

(54) **COMMUNICATION DEVICE AND COMMUNICATION METHOD**

(30) Priority: 08.07.2022 JP 2022110552
(71) Applicant: Panasonic Intellectual Property Corporation of America, Torrance, CA 90504 (US)
(72) Inventor: KANAYA, Hiroyuki, Kadoma-shi, Osaka 571-0057 (JP); URABE, Yoshio, Kadoma-shi, Osaka 571-0057 (JP); IWAI, Takashi, Kadoma-shi, Osaka 571-0057 (JP); TAKATA, Tomofumi, Kadoma-shi, Osaka 571-0057 (JP); MINOTANI, Jun, Kadoma-shi, Osaka 571-0057 (JP)
(74) Representative: Grünecker Patent- und Rechtsanwälte PartG mbB
(86) International application number: PCT/JP2023/023720
(87) International publication number: WO 2024/009838

(57) **Abstract**

A first communication device according to the present invention comprises: a control circuit that controls communication via a first link between a second communication device and a third communication device which is connected to the first communication device; and a communication circuit that transmits, to the third communication device, information which instructs communication via the first link.

## Description

### Technical Field

The present disclosure relates to a communication apparatus and a communication method.

### Background Art

In the Institute of Electrical and Electronics Engineers (IEEE), studies have been carried out on the IEEE 802.11be standard (hereinafter, also referred to as "11be") for the next generation radio Local Area Network (LAN), which is the successor to the IEEE 802.11ax standard (hereinafter, also referred to as "11ax"). Further, discussions on the successor standard to 11be are also ongoing (for example, see Non-Patent Literatures (hereinafter referred to as "NPLs") 1 and 2).

For 11be and the successor standard to 11be, communication between a plurality of terminals (also referred to as a non-Access Point Station (non-AP STA)) has been studied in addition to communication between an access point (also referred to as a "base station"; and hereinafter referred to as "AP") and a terminal.

### Citation List

### Non Patent Literature

NPL 1
   IEEE 802.11-22/0046r1, Next 802.11 generation after 11be, January 11, 2022
NPL 2
   IEEE 802.11-22/0059r0, Beyond 'be', January 17, 2022
NPL 3
   Draft P802.11be/D2.0, May 2022
NPL 4
   IEEE 802.11-22/0039r3, January 10, 2022
NPL 5
   Draft P802.11ax/D8.0, October 2020

### Summary of Invention

However, there is room for improvement in the performance of communication between terminals.

A non-limiting embodiment of the present disclosure contributes to providing a communication apparatus and a communication method capable of improving the performance of communication between terminals.

A communication apparatus according to an embodiment of the present disclosure includes: control circuitry, which, in operation, controls communication in a first link between a second communication apparatus and a third communication apparatus that is connected to the first communication apparatus; and communication circuitry, which, in operation, transmits information indicating the communication in the first link to the third communication apparatus.

It should be noted that general or specific embodiments may be implemented as a system, an apparatus, a method, an integrated circuit, a computer program, a storage medium, or any selective combination thereof.

According to an embodiment of the present disclosure, it is possible to improve the performance of communication between terminals.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an exemplary Trigger frame;
FIG. 2 illustrates Type and Subtype fields included in Frame Control of FIG. 1;
FIG. 3 illustrates an exemplary configuration of a Common Info field illustrated in FIG. 1;
FIG. 4 is a diagram illustrating a Trigger type designated in a Trigger Type subfield in the Common Info field illustrated in FIG. 3;
FIG. 5 illustrates a field of a TXOP Sharing Mode considered in 11be;
FIG. 6 illustrates an exemplary configuration of a User Info field included in a User Info List illustrated in FIG. 1;
FIG. 7 is a sequence diagram illustrating an exemplary operation of TXOP Sharing Mode 2;
FIG. 8 illustrates an exemplary configuration of the User Info field in MU-RTS TXS TF, which is discussed in 11be;
FIG. 9A is a block diagram illustrating an exemplary configuration of a part of an AP according to an embodiment of the present disclosure;
FIG. 9B is a block diagram illustrating an exemplary configuration of a part of an STA according to an embodiment of the present disclosure;
FIG. 10 is a block diagram illustrating an exemplary configuration of an STA according to an embodiment;
FIG. 11 is a block diagram illustrating an exemplary configuration of an AP according to an embodiment;
FIG. 12 illustrates Arrangement Example 1 of a communication apparatus in an embodiment;
FIG. 13 illustrates an exemplary P2P communication control;
FIG. 14 illustrates a first exemplary operation of communication control in an embodiment;
FIG. 15 is a block diagram illustrating another exemplary configuration of an STA according to an embodiment;
FIG. 16 is a block diagram illustrating another exemplary configuration of an STA according to an embodiment;
FIG. 17 illustrates Arrangement Example 2 of the communication apparatus in an embodiment;
FIG. 18 illustrates an exemplary operation of SR in an embodiment;
FIG. 19 illustrates Arrangement Example 3 of a communication apparatus in an embodiment;
FIG. 20 illustrates a first operation example of performing SR in the arrangement illustrated in FIG. 19; and
FIG. 21 illustrates a second operation example of performing SR in the arrangement illustrated in FIG. 19.

### Description of Embodiments

Hereinafter, embodiments of the present disclosure will be described in detail with reference to the drawings.

The successor standards to 11ax, namely 11be and the successor to 11be, are currently under consideration. 11ax is also referred to as High Efficiency (HE), and 11be is also referred to as Extreme High Throughput (EHT). Further, discussions on a successor standard to 11be (hereinafter referred to as "beyond 11be") are also ongoing (for example, NPLs 1 and 2).

In 11be and beyond 11be, it has been considered that an AP controls communication between a plurality of STAs in addition to communication between the AP and an STA. Communication performed between a plurality of STAs may be referred to as Direct Link (DiL) or peer to peer (hereinafter referred to as "P2P") communication.

In 11be, for example, it is considered that the AP indicates TXOP sharing (TXS) to one STA using a Trigger frame in which Multi-User Request-To-Send (MU-RTS) is designated as the type of the Trigger frame (see, for example, NPL 3). Note that the type of the Trigger frame is referred to as, for example, "Trigger Type." Further, a Trigger frame in which MU-RTS is designated as the type of Trigger frame is referred to as "MU-RTS TXS TF." Further, TXOP is an abbreviation for Transmission Opportunity. For example, TXOP may be regarded as the channel occupancy time. That is, in the MU-RTS TXS TF, one STA is instructed that a transmission opportunity (for example, the channel occupancy time) is shared with the STA. In other words, the AP allocates at least a part of the TXOP acquired by the AP to the STA using the MU-RTS TXS TF.

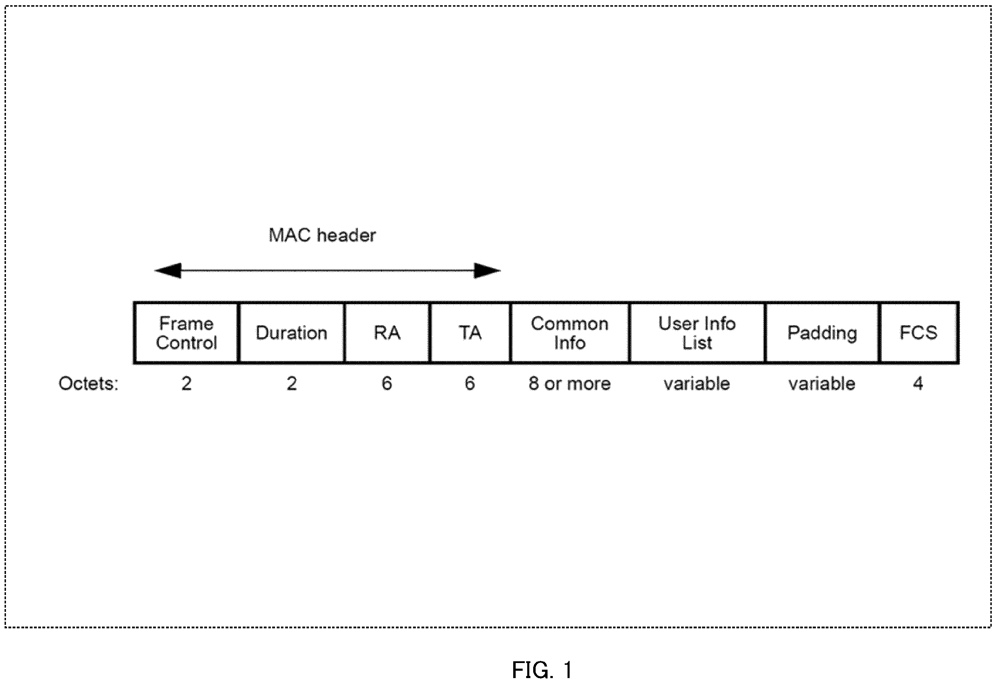

FIG. 1 illustrates an exemplary Trigger frame. As illustrated in FIG. 1, the Trigger frame includes a "Frame Control field," a "Common Info field," and a "User Info List field." Note that, in the following description, the notation "field" may be omitted. Further, in the following description, the term "field" and the term "subfield" may be used interchangeably.

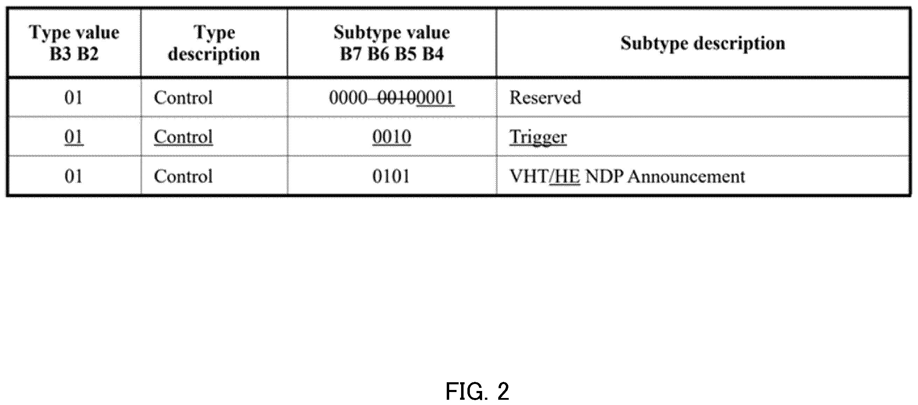

FIG. 2 illustrates the Type and Subtype fields included in the Frame Control of FIG. 1. As illustrated in FIG. 2, the Type field included in the Frame Control is "01" and the Subtype field is "0010," indicating that the frame is a Trigger frame (see NPL 5).

As illustrated in FIG. 1, the Trigger frame includes a field that contains information common among a plurality of terminals and a field referred to as User Info List for a plurality of terminals to be frequency-multiplexed. Note that the field including the information common among a plurality of terminals may be referred to as a "Common Info field."

The User Info List includes one or more fields that contain information individual (or specific) for the terminal. Note that a field that includes individual (or specific) information for the terminal may be referred to as a "User Info field."

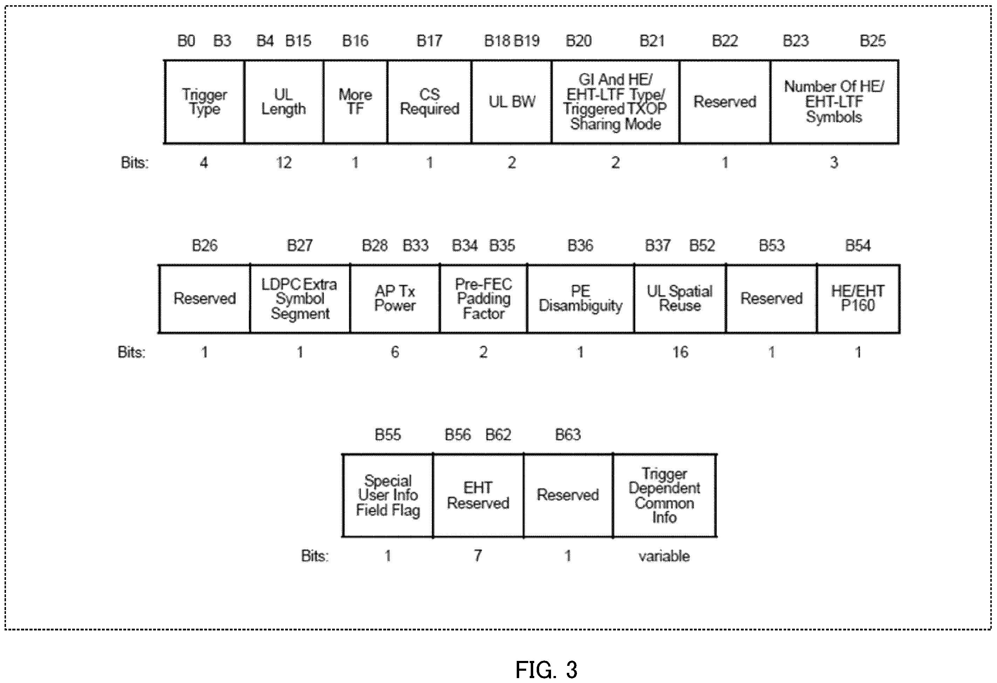

FIG. 3 illustrates an exemplary configuration of the Common Info field illustrated in FIG. 1. The Common Info field includes a "Trigger Type subfield" and a "GI And HE/EHT-LTF Type/Triggered TXOP Sharing Mode subfield."

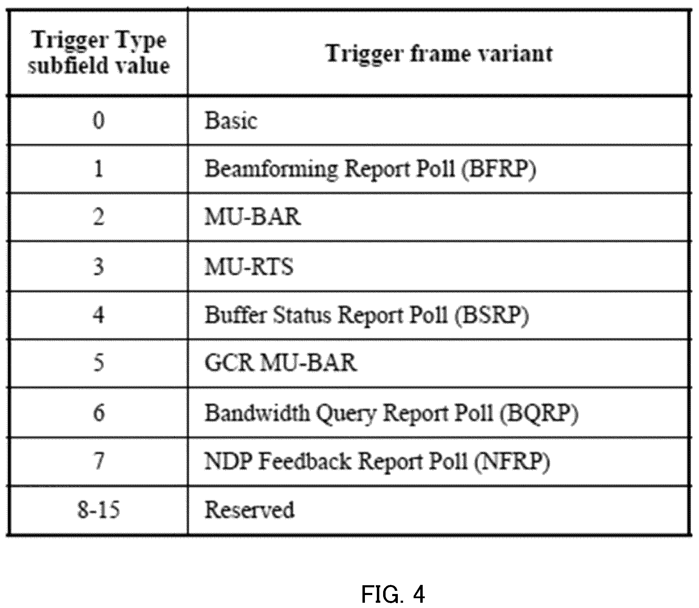

FIG. 4 is a diagram illustrating the Trigger type designated in the Trigger Type subfield in the Common Info field illustrated in FIG. 3. FIG. 4 illustrates the correspondence between the value configured (or designated) in the Trigger Type subfield (referred to as "Trigger Type subfield value" in FIG. 4) and the Trigger type (referred to as "Trigger frame variant" in FIG. 4).

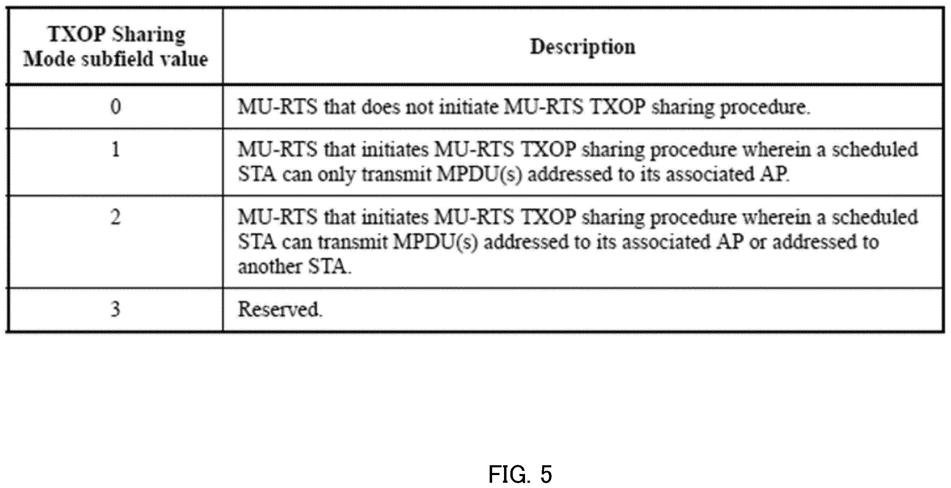

FIG. 5 illustrates a field of the TXOP Sharing Mode considered in 11be. The field of the TXOP Sharing Mode to be discussed in 11be is, for example, the "GI And HE/EHT-LTF Type/Triggered TXOP Sharing Mode subfield" included in FIG. 3.

FIG. 5 illustrates the correspondence between the value configured in the TXOP Sharing Mode subfield (referred to as "TXOP Sharing Mode subfield value" in FIG. 5) and the content indicated by that value (referred to as "Description" in FIG. 5). As illustrated in FIG. 5, in a case where the TXOP Sharing Mode subfield value is 1, the STA can communicate only with the AP to which the STA is connected, and in a case where the TXOP Sharing Mode subfield value is 2, the STA can communicate with the AP (associated AP) to which the STA is connected and with another terminal. The mode in which the TXOP Sharing Mode subfield value is 1 may be referred to as TXOP Sharing Mode 1, and the mode in which the TXOP Sharing Mode subfield value is 2 may be referred to as TXOP Sharing Mode 2.

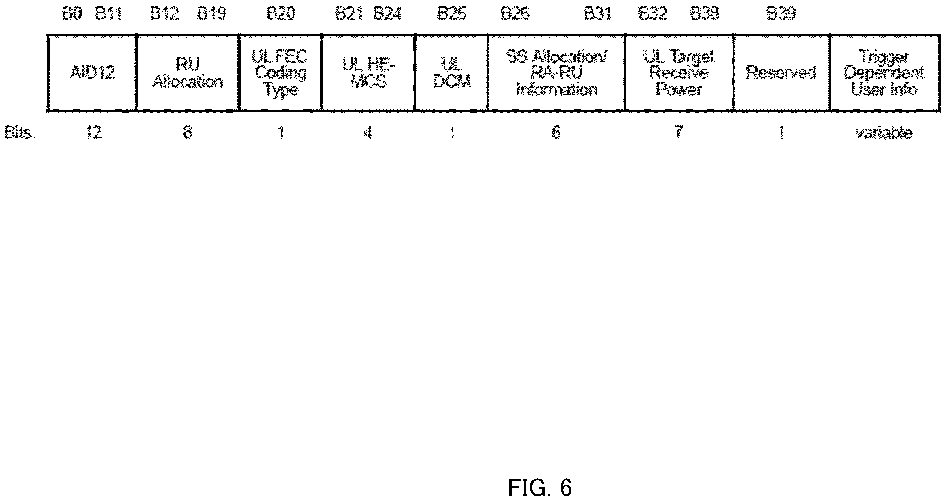

FIG. 6 is a diagram illustrating an exemplary configuration of a User Info field included in the User Info List illustrated in FIG. 1.

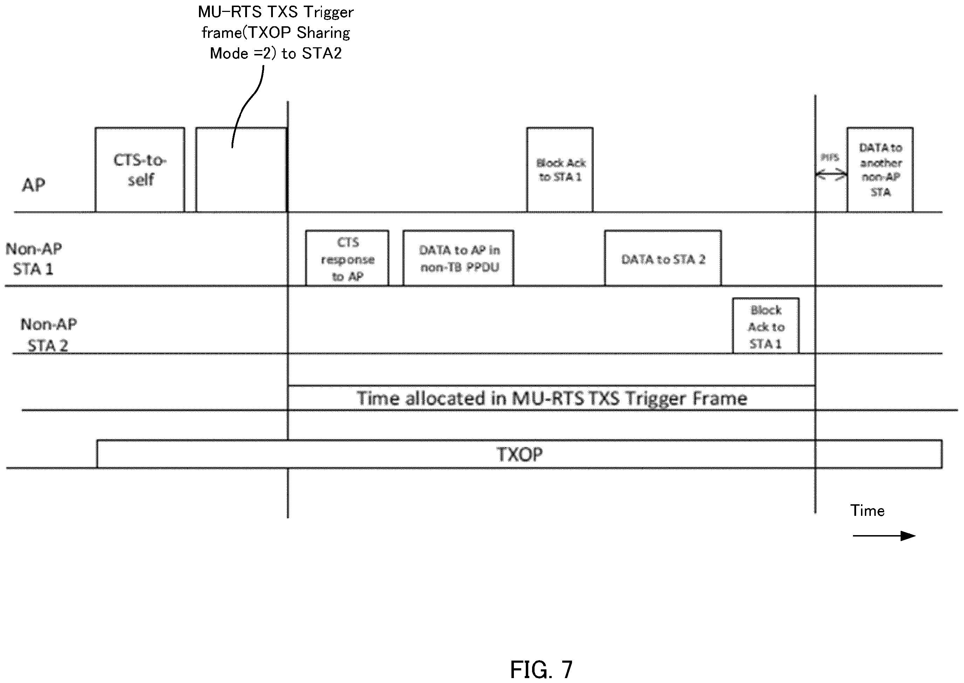

FIG. 7 is a sequence diagram illustrating an exemplary operation of TXOP Sharing Mode 2. The lateral direction in FIG. 7 indicates the time direction. The operation example illustrated in FIG. 7 is an operation example in a case where the Trigger Type subfield in the Common Info field in the Trigger frame is set to Trigger Type subfield value = 3 as illustrated in FIG. 4, and the field of the TxOP Sharing Mode is set to TxOP Sharing Mode subfield value = 2 as illustrated in FIG. 5 (see NPL 3). A Trigger frame set to Trigger Type subfield value = 3 is a Trigger frame in which "MU-RTS" is designated as the Trigger type, that is, "MU-RTS TXS TF."

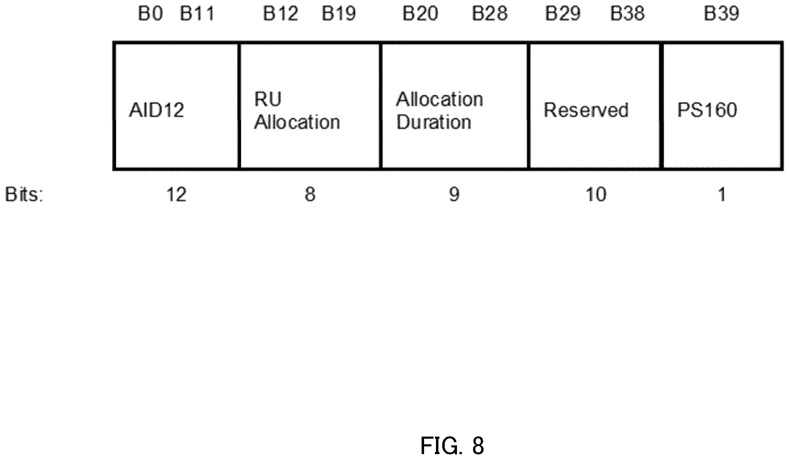

FIG. 8 illustrates an exemplary configuration of a User Info field in an MU-RTS TXS TF, which is discussed in 11be (see, for example, NPL 4). The User Info field includes an AID12 subfield. The AID12 subfield includes an Association ID (also referred to as AID). The AID may be identification information that designates a terminal.

FIG. 7 illustrates periods of "TXOP" and "Time allocated in MU-RTS TXS TF." "Time allocated in MU-RTS TXS TF" is an allocation period corresponding to a part of the TXOP.

As illustrated in FIG. 7, in "Time allocated in MU-RTS TXS TF," the terminal (Non-AP STA 1 in the example of FIG. 7) designated by the Association ID indicated by the AID12 subfield in the User Info field transmits a radio frame to the AP (AP in FIG. 7) to which the terminal is connected or to another terminal (Non-AP STA 2 in the example of FIG. 7).

As described above, by designating TXOP Sharing Mode 2 in the MU-RTS TXS TF (for example, by setting the TxOP Sharing Mode subfield value to 2), P2P (Peer to Peer) communication with the STA designated by the AID becomes possible. The P2P communication here corresponds to communication between an STA designated by an AID and another STA. Note that a link in which the P2P communication is performed is described as a P2P link.

However, there is room for improvement in the performance of P2P communication between STAs. For example, when a link in which the P2P communication is performed (a "P2P link") is included, the AP might be unable to perform appropriate scheduling. In a case where appropriate scheduling cannot be performed, the utilization efficiency of resources decreases, and the throughput decreases. Further, for example, a method in which the AP indicates P2P communication to a plurality of STAs through scheduling has not been sufficiently considered.

In a non-limiting embodiment of the present disclosure, an example of a control method for an AP in a case where a plurality of terminals perform P2P communication will be described.

### [Configuration of Radio Communication System]

The radio communication system according to the present embodiment may include, for example, AP 100 and STA 200. AP 100 may include, for example, both the functions of a sharing AP and a shared AP, or may include either of the functions. Further, AP 100 may be configured to be capable of the operation of STA 200. Further, STA 200 may be configured to be capable of the operation of AP 100.

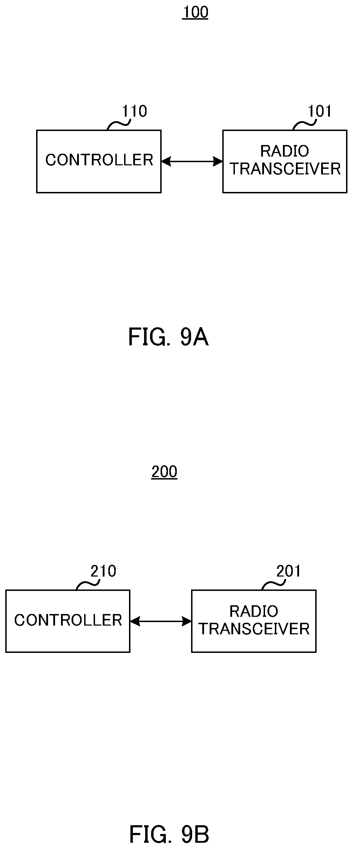

FIG. 9A is a block diagram illustrating an exemplary configuration of a part of AP 100 according to an embodiment of the present disclosure. FIG. 9B is a block diagram illustrating an exemplary configuration of a part of STA 200.

AP 100 illustrated in FIG. 9A is an example of the first communication apparatus. In AP 100 illustrated in FIG. 9A, controller 110 (corresponding to an example of control circuitry) controls communication in a first link (for example, a P2P link between two STAs 200) between a second communication apparatus (for example, STA 200) and a third communication apparatus (for example, another STA 200 different from STA 200 corresponding to the second communication apparatus) connected to the first communication apparatus (for example, AP 100). Radio transceiver 101 (corresponding to an example of transmission circuitry) transmits information indicating communication in the first link to the third communication apparatus.

STA 200 illustrated in FIG. 9B is an example of a communication apparatus (for example, the third communication apparatus). In terminal 200 illustrated in FIG. 9B, radio transceiver 201 receives information indicating the communication in the first link (for example, the P2P link between two STAs 200) from the first communication apparatus (for example, AP 100). Controller 210 performs the communication in the first link based on the received information.

### (Embodiment)

In an embodiment of the present disclosure, an example will be described in which at least three STAs are disposed and control of a plurality of communications including P2P communication is performed.

### [Configuration of STA]

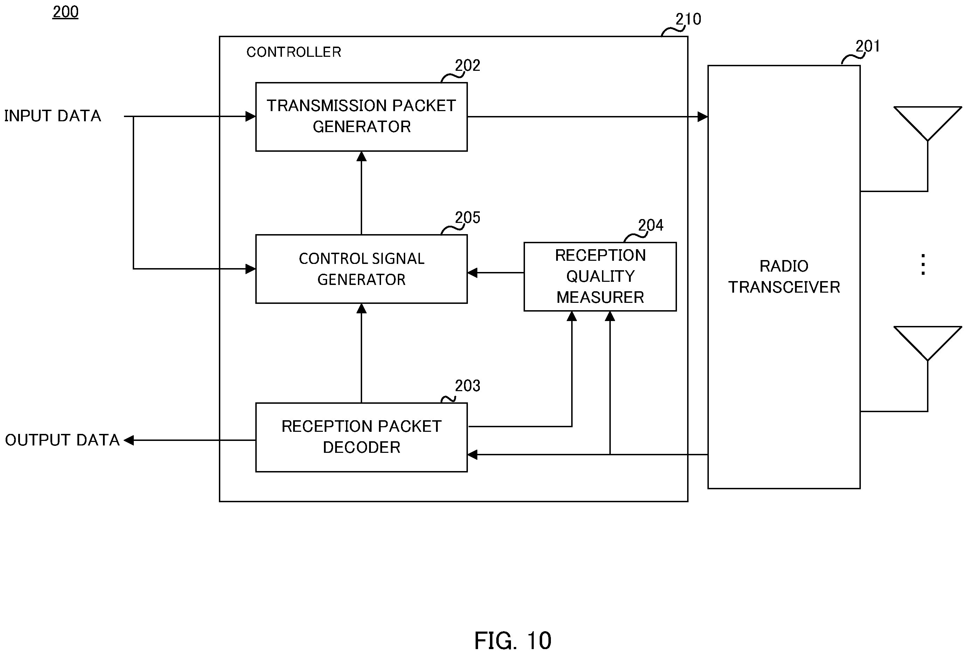

FIG. 10 is a diagram illustrating an exemplary configuration of STA 200 according to an embodiment. STA 200 includes radio transceiver 201, transmission packet generator 202, reception packet decoder 203, reception quality measurer 204, and control signal generator 205. Transmission packet generator 202, reception packet decoder 203, reception quality measurer 204, and control signal generator 205 may be included in controller 210.

Transmission packet generator 202 generates a transmission packet from input data and control information output from control signal generator 205, and outputs the transmission packet to radio transceiver 201.

Radio transceiver 201 converts the transmission packet generated by transmission packet generator 202 into a radio signal and transmits the converted radio signal. Radio transceiver 201 receives a radio signal and outputs the received radio signal to reception packet decoder 203 and reception quality measurer 204.

Reception packet decoder 203 decodes the radio signal into a packet and outputs the output data from the decoded packet. Further, reception packet decoder 203 extracts control information from the decoded packet and outputs the control information to control signal generator 205 and reception quality measurer 204.

Reception quality measurer 204 measures the reception quality of the reception signal based on the reception signal output from radio transceiver 201 and the control information output from reception packet decoder 203.

Control signal generator 205 generates the control information based on at least one of the input data, the control information outputted from reception packet decoder 203, the reception quality measured by reception quality measurer 204, and the internal state, and outputs the generated control information to transmission packet generator 202. Note that the internal state may be, for example, the capability (for example, Capability) of STA 200 and/or the configuration for STA 200 (for example, STA Configuration, and/or the value of a Management Information Base (MIB) variable (also referred to as a MIB attribute)).

### [Configuration of AP]

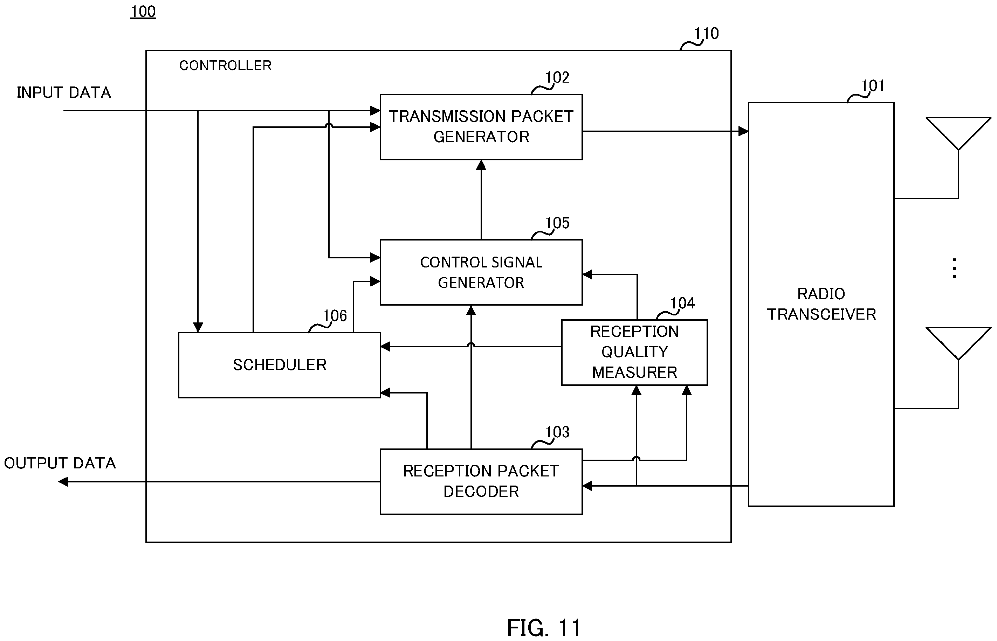

FIG. 11 is a diagram illustrating an exemplary configuration of AP 100 according to an embodiment. AP 100 includes radio transceiver 101, transmission packet generator 102, reception packet decoder 103, reception quality measurer 104, control signal generator 105, and scheduler 106. Transmission packet generator 102, reception packet decoder 103, reception quality measurer 104, control signal generator 105, and scheduler 106 may be included in controller 110.

Transmission packet generator 102 generates a transmission packet from the input data and the control information output from control signal generator 105, and outputs the transmission packet to radio transceiver 101.

Radio transceiver 101 converts the transmission packet generated by transmission packet generator 102 into a radio signal and transmits the converted radio signal. Radio transceiver 101 receives a radio signal and outputs the received radio signal to reception packet decoder 103 and reception quality measurer 104.

Reception packet decoder 103 decodes the radio signal into a packet and outputs the output data from the decoded packet. Further, reception packet decoder 103 extracts control information from the decoded packet and outputs the control information to control signal generator 105, reception quality measurer 104, and scheduler 106.

Reception quality measurer 104 measures the reception quality of the reception signal based on the reception signal output from radio transceiver 101 and the control information output from reception packet decoder 103.

Control signal generator 105 generates control information based on at least one of the input data, the control information output from reception packet decoder 103 and scheduler 106, the reception quality measured by reception quality measurer 104, and the internal state, and outputs the generated control information to transmission packet generator 102. Note that the internal state may be, for example, the capability of AP 100 (for example, Capability) and/or the configuration of STA 200 (for example, STA Configuration, and/or the value of a MIB variable).

Scheduler 106 performs scheduling based on at least one of the input data, the control information output from reception packet decoder 103, the reception quality measured by reception quality measurer 104, and the internal state. Scheduler 106 performs transmission control of the input data generated in transmission packet generator 102 based on the result of the scheduling. Further, scheduler 106 outputs control information including the result of the scheduling to control signal generator 105. Here, the scheduling may include, for example, determining resources for signal transmission to STA 200, and/or determining resources that STA 200 uses for signal transmission, determining a communication method to be used for communication with STA 200, and the like.

### <Example 1>

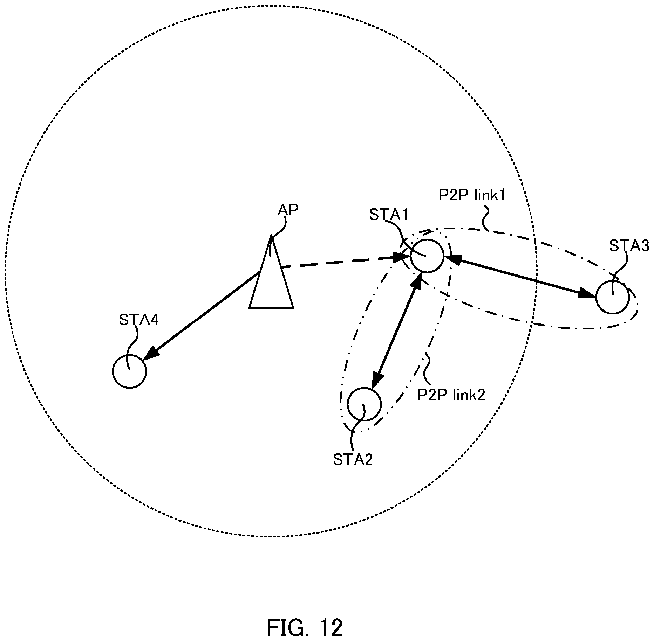

FIG. 12 illustrates Arrangement Example 1 of communication apparatuses in the present embodiment. FIG. 12 illustrates one AP and four STAs 1 to 4.

In Example 1, as illustrated in FIG. 12, an example will be described in which STA 1 and STA 4 associate with the AP, STA 1 and STA 3 perform P2P communication, and STA 1 and STA 2 perform P2P communication. Note that the P2P link between STA 1 and STA 3 is referred to as "P2P link 1," and the P2P link between STA 1 and STA2 is referred to as "P2P link 2." Further, the STAs associating with the AP may correspond to the STAs connecting to the AP in a state of being capable of communicating with the AP or being under the control of the AP.

As illustrated in FIGS. 7 and 8, in the method of designating an STA with an AID in the AID12 subfield in the User Info field, when STA 1 is included in both P2P link 1 and P2P link 2 as illustrated in FIG. 12, STA 1 cannot identify P2P link 1 or P2P link 2 even if STA 1 is designated by the AID.

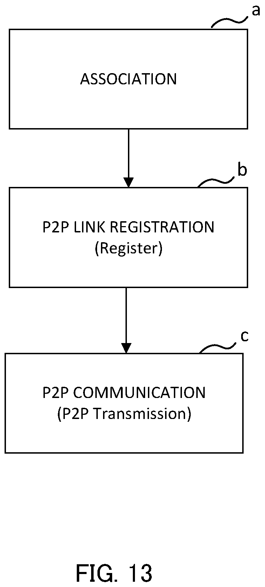

FIG. 13 illustrates an example of P2P communication control. For example, between AP and STA 1 in FIG. 12, as shown in FIG. 13, P2P communication ("c" in FIG. 13) is performed after association ("a" in FIG. 13) and P2P link registration ("b" in FIG. 13) are performed.

In the association illustrated in FIG. 13, for example, an Association Request and an Association Response defined in the IEEE 802.11 standard may be performed between the AP and the STA. Note that, in the Association Response, the AP may notify the STA of the AID assigned to the STA.

Further, the STA may perform a connection of a P2P link (also referred to as P2P link setup) with another STA. The connection procedure for the P2P link may be initiated by an STA associated with the AP or by an STA not associated with an AP. The STA associated with the AP may be referred to as an associated STA. In a case where the connection procedure of the P2P link is initiated by the associated STA, the associated STA becomes the initiator. The STA not associated with the AP may be referred to as an unassociated STA. In a case where the connection procedure for the P2P link is initiated by an unassociated STA, the unassociated STA becomes the initiator. An STA that participates in the connection procedure but is not an initiator may be referred to as a responder.

In the P2P link registration (which may also be referred to as register, registration, indication, notify, or notification) illustrated in FIG. 13, the STA registers the P2P link for the AP. The registration method is not particularly limited. For example, as a registration method, the STA may transmit a P2P Register Request to the AP, and in response to the P2P Register Request, the AP may transmit a P2P Register Response to the STA. In this case, the P2P Register Request may include information for identifying the link to be registered. The information identifying the link may be information identifying the STA that is the counterpart in the P2P communication. The information for identifying the STA that is the counterpart in the P2P communication may be, for example, the AID of the STA that is the counterpart in the P2P communication, a combination of the AID of the STA that is the counterpart in the P2P communication and a BSSID (Basic Service Set Identifier), or a MAC (media access control) address of the STA that is the counterpart in the P2P communication. The P2P Register Request may include information indicating a type of information (type of address) for identifying an STA that is a counterpart in P2P communication. The P2P Register Request may include information indicating whether the STA that is a peer in the P2P communication is an STA associated with an AP, and/or information indicating whether the STA is associated with an AP.

The AP may notify the STA of the identification information (for example, an identifier) for identifying the P2P link in the P2P Register Response. The identifier for identifying the P2P link is hereinafter referred to as a P2P ID. The value of the P2P ID may be selected by the AP exclusively with respect to the value of the AID in the AID space. For example, the AP selects a value that is not used as an AID from the range of 1 to 2007, which is a range that can be used as the value of an AID, as a value for a P2P ID, and the AP does not use the value for the P2P ID (which may be referred to as an AID value for a P2P ID) as an AID to be assigned to an individual STA. That is, the AP may assign identification information for identifying a P2P link and identification information for identifying an individual STA from a common range (for example, a range that can be used as a value of AID) that is common to both of the identifiers.

As described above, by selecting the value of the P2P ID exclusively to the value of the AID assigned to the individual STA, the AP can control the P2P link using the P2P ID. For example, in a method of indicating the value of an AID assigned for a P2P ID, a field indicating an individual STAcan also be used for indicating a P2P link. The field indicating the individual STA may be, for example, the AID12 subfield in the Trigger frame such as

### MU-RTS TXS.

In the P2P communication ("c" in FIG. 13) illustrated in FIG. 13, transmission and reception are performed between STAs included in the P2P link and between an STA included in the P2P link and an AP. In this case, the AP may control the P2P communication. For example, the AP may perform control of transmission and reception using the P2P ID.

As described above, by using the P2P ID, the AP can identify the P2P link and control the P2P communication.

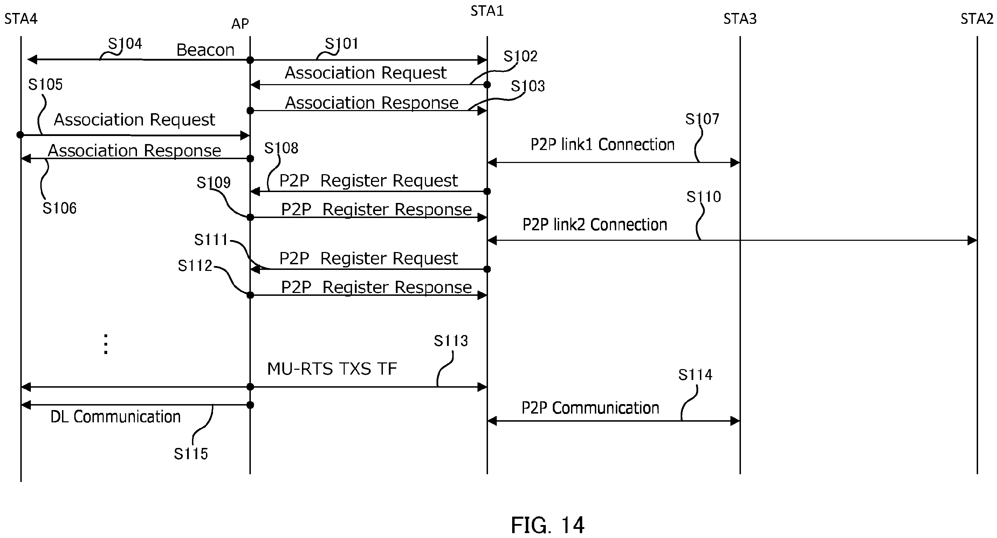

Hereinafter, by way of example, a description will be given of an exemplary operation of spatial reuse (hereinafter referred to as SR) performed for communication in P2P link 1 and communication between the AP and STA 4 by control of the AP in the arrangement example illustrated in FIG. 12 and the operation sequence example illustrated in FIG. 14. The communication in P2P link 1 corresponds to P2P communication between STA 1 and STA 3. SR corresponds to communication in which a time-frequency resource is spatially reused. Note that, for example, in a case where SR is executed between the communication in P2P link 1 and the communication between the AP and STA 4, the same time-frequency resource is used for both the communication in P2P link 1 and the communication between the AP and STA4. Note that, in the two communications, the fact that the same time-frequency resource is used may correspond to the fact that at least a part of the time is the same between the two communications and at least a part of the frequency band is the same between the two communications.

FIG. 14 is a diagram illustrating a first operation example of communication control in the present embodiment. In FIG. 14, STA 1 receives in radio transceiver 201 a Beacon transmitted from the AP and performs the reception processing on the Beacon in reception packet decoder 203 (S101 in FIG. 14). STA 1 performs, in transmission packet generator 202, transmission processing on the information on the Association Request generated in control signal generator 205, and transmits the information to the AP via radio transceiver 201 (S102). The information on the Association Request may be simply referred to as an Association Request.

The AP receives the Association Request in radio transceiver 101 and performs the reception processing on the Association Request in reception packet decoder 103. The AP performs, in transmission packet generator 102, transmission processing on the information on the Association Response generated in control signal generator 105, and transmits the information to STA 1 via radio transceiver 101 (S103). The information on the Association Response may be simply referred to as Association Response.

The information on the Association Response transmitted from AP to STA 1 may include an AID (for example, AID = 1) that AP1 has assigned to STA 1.

STA 4 receives a Beacon from the AP in the same manner as STA 1 (S104), and transmits an Association Request to the AP (S105). The AP that has received the Association Request from STA4 transmits an Association Response to STA 4 (S106). The information on the Association Response transmitted from AP to STA 4 may include an AID (for example, AID = 2) assigned to STA 4.

Next, STA 1 performs a P2P link connection with STA 3 (S107).

Note that the connection method for the P2P link is not limited to the present disclosure. For example, the P2P link may be set up using Tunneled Direct Link Setup (TDLS) or may be set up using the form of a Basic Service Set (BSS) different from an infrastructure BSS, such as an IBSS (Independent Basic Service Set) (so-called ad-hoc mode). Alternatively, for example, a method in which one of the P2P communications becomes a control station, such as Wi-Fi (registered trademark) Direct and/or Personal Basic Service Set (PBSS), may be used for the connection of the P2P link. Further, the communication apparatus (for example, STA) may participate (associate) in a BSS managed by an AP for connection with the AP, and may also perform the function of the AP, thereby operating STA-to-STA communication corresponding to a P2P link by operating a BSS (which may be an infrastructure BSS, an IBSS, or a PBSS) different from the BSS managed by the AP. Here, a BSS different from the BSS managed by the AP may be, for example, any of an infrastructure BSS different from the BSS managed by the AP, an IBSS, or a PBSS.

The function of the AP performed by a communication apparatus (for example, STA) may be referred to as an agent AP, a secondary AP, a mobile AP, a multi-AP participating AP, or the like. In this case, the P2P Register Request and the P2P Register Response may be referred to as an AP registration request and an AP registration response, respectively. For example, when the AP receives an AP registration request from a secondary AP (for example, STA 1 that performs the function of AP), the AP may determine a mapping between the value of AID managed by the secondary AP (which may correspond to a link between STA 1 and STA2, for example) and the P2P ID managed by the AP (which may correspond to the value of AID managed by the AP).

Further, the AP may notify the communication apparatus (for example, STA) of the range of values of the P2P ID that the communication apparatus (for example, STA) can use, and the communication apparatus (for example, STA) may determine the value of the AID corresponding to the P2P link within the range of values of the P2P ID notified by the AP when the P2P link is set up.

In a case where TDLS is used for the P2P link, two STAs that constitute the P2P link may be associated with the same AP.

In a case where a BSS different from the BSS managed by the AP (for example, an IBSS, a PBSS, or a P2P Group) is configured for a P2P link, at least one STA that constitutes the P2P link belongs to both the infrastructure BSS of the AP and the BSS for the P2P link. In this case, an STA that belongs to both the infrastructure BSS of the AP and the BSS for the P2P link may participate in both BSSs with the same MAC address. Alternatively, an apparatus of an STA belonging to an infrastructure BSS of an AP may also logically perform a role of a co-located STA in a BSS for another P2P link. In this case, the two STAs within the same apparatus may use separate MAC addresses from each other.

In a case where Wi-Fi Direct is used for a P2P link and one of two communication apparatuses (for example, STAs) that constitute the P2P link is not associated with an AP, the other STA that is associated with the AP may control the P2P link as a Group Owner (GO) and may indicate a TXOP to the other STA within the range of the TXOP indicated by the AP. The STA that is associated with the AP and indicates the TXOP is an STA that is not associated with the AP. In this case, the MAC address of the STA and the P2P Interface address of the GO used as the MAC address in the P2P link are different, and the AP may be notified of the P2P Interface address of the GO and a counterpart P2P Interface address as information on the P2P link. An STA that is not associated with an AP may be referred to as a P2P Client. In this case, the STA associated with the AP may notify the AP of the P2P Interface address of the GO and the P2P Interface address of the P2P Client as information on the P2P link.

Note that an operation example in which the STA performs a P2P link connection after associating with the AP has been described, but the STA may perform the P2P link connection before associating with the AP.

After establishing the P2P link connection with STA 3, STA 1 performs, in transmission packet generator 202, the transmission processing on the P2P Register Request generated in control signal generator 205, and transmits the P2P Register Request to the AP via radio transceiver 201 (S108 in FIG. 14).

The AP receives the P2P Register Request transmitted from STA 1 in radio transceiver 101, and performs the reception processing on the P2P Register Request in reception packet decoder 103. The AP performs, in transmission packet generator 102, transmission processing on the P2P Register Response generated in control signal generator 105, and transmits the P2P Register Response to STA 1 via radio transceiver 101 (S109).

Note that the information in the P2P Register Response transmitted from the AP to STA 1 may include the P2P ID or AID assigned for P2P link 1. For example, as described above, in a case where the AID assigned by the AP to STA 1 is AID=1 and the AID assigned by the AP to STA 4 is AID=2, the AP may assign an AID different from AID=1 and 2 (for example, AID=3) to P2P link 1.

Similarly to the P2P link (that is, P2P link 1) between STA 1 and STA 3, STA 1 transmits (S111 in FIG. 14) a P2P Register Request to the AP and receives (S112 in FIG. 14) a P2P Register Response from the AP after (after S110 in FIG. 14) performing the P2P link connection with STA 2.

The information in the P2P Register Response transmitted from AP to STA 1 may include a P2P ID or AID assigned to P2P link 2. For example, as described above, in a case where the AID that AP assigns to STA 1 is AID=1, the AID that AP assigns to STA4 is AID=2, and the AID that AP assigns to P2P link 1 is AID=3, the AP may assign an AID (for example, AID=4) different from SID=1, 2, and 3 to P2P link 2.

Note that the AP may control communication between the AP and STA and P2P communication between STAs based on the reception quality.

The AP may, for example, notify scheduler 106 of the reception quality between the AP and STA measured in reception quality measurer 104. Note that the reception quality to be measured may include the reception quality between the AP and the STA associated with the AP, and the reception quality between the AP and the STA not associated with the AP. Note that the reception quality may be represented by, for example, any of a reception power value, a path loss, or interference impact information.

STA 1 may transmit, for example, the reception quality between STA 1 and another STA (including the AP) and the reception quality of the P2P link, which are measured in reception quality measurer 204, to the AP by transmission packet generator 202 and radio transceiver 201. Note that, the reception quality of the P2P link in STA 1 may be the reception quality between STA 1 and another STA (for example, STA 3) that constitutes the P2P link with STA 1. Further, the reception quality to be measured may include the reception quality between the STA and another STA that does not constitute a P2P link with the STA, and the reception quality between the STA and the AP. In this case, the AP may notify scheduler 106 of the reception quality decoded by radio transceiver 101 and reception packet decoder 103.

The AP may control, in scheduler 106, the STA to/from which transmission and reception are performed and the P2P communication based on the reception quality.

For example, the arrangement of the AP and the STA illustrated in FIG. 12 is an arrangement in which the interference effect between the STAs included in P2P link 1 (that is, STA 1 and STA 3) and STA 4 is relatively small. In this case, the reception quality acquired by the AP indicates that the influence of interference caused by a signal transmitted by the STAs included in P2P link 1 on STA 4 is relatively small. For example, the interference effect being relatively small corresponds to the interference effect being equal to or less than a predetermined level. The AP may determine, based on this reception quality, that transmission using SR (hereinafter, SR transmission) between downlink (DL) transmission from the AP to STA 4 and P2P communication in P2P link 1 are possible.

Further, for example, the arrangement illustrated in FIG. 12 is an arrangement in which the interference effect between STAs (that is, STA 1 and STA 2) included in P2P link 2 and STA 4 is relatively large. In this case, the reception quality acquired by the AP indicates that the influence of interference caused by a signal transmitted by the STAs included in P2P link 2 on STA 4 is relatively large. For example, the interference effect being relatively large corresponds to the interference effect being larger than a predetermined level. Based on this reception quality, the AP may determine not to perform SR transmission between the transmission and reception between the AP and STA4 and the P2P communication in P2P link 2. In this case, the AP may notify control signal generator 105 of an instruction to perform the DL transmission from the AP to STA 4 and the P2P communication in P2P link 2 in different frequency bands from each other. The instruction to perform DL transmission from the AP to STA 4 and P2P communication in P2P link 2 in different frequency bands from each other may be, for example, an instruction to perform DL transmission and P2P communication using Orthogonal Frequency Division Multiple Access (OFDMA).

In a case where the AP performs SR (in a case where scheduler 106 instructs the AP to perform SR), control signal generator 105 and transmission packet generator 102 generate an MU-RTS TXS TF including one User Info field (see FIG. 8), and output the generated MU-RTS TXS TF to radio transceiver 101. In the generation of the MU-RTS TXS TF, AID12 in the User Info field may be an AID assigned to P2P link 1 (for example, AID = 3). In other words, the User Info field, which is a field that includes information specific (or unique) to the STA, may include information on a P2P link in the generation of the MU-RTS TXS TF. In this case, the identification information (for example, AID assigned to P2P link 1) for identifying the P2P link may be transmitted in the same format (for example, User Info field) as the identification information for identifying the STA.

The AP transmits the MU-RTS TXS TF to an STA (for example, STA 1) associated with AP in radio transceiver 101 (S113 in FIG. 14).

STA 1 receives the MU-RTS TXS TF in radio transceiver 201, and outputs it to control signal generator 205 via reception packet decoder 203. Control signal generator 205 detects that the value of AID12 included in the User Info field in the received MU-RTS TXS TF is P2P link 1 (for example, AID=3). Control signal generator 205 outputs to transmission packet generator 202 both or either of the control information generated based on the transmission control information included in the MU-RTS TXS TF (for example, transmission frequency band information by RU Allocation included in the corresponding User Info field) and the internal state, and, transmission data for STA3.

The transmission packet generated in transmission packet generator 202 is transmitted to STA 3 in the transmission frequency band designated by the transmission control information. The transmission to STA 3 is performed by P2P communication (S114 in FIG. 14).

Note that, STA3 may transmit data and/or control information to STA 1 in the same frequency band as the transmission frequency band used for the transmission from STA 1 to STA 3, in response to the transmission from STA 1 to STA 3, for example. In this case, the transmission and reception periods of STA 1 and STA 3 may be limited to the TXOP designated in the MU-RTS TXS TF.

In a case where the AP performs SR (in a case where scheduler 106 indicates AP to perform SR), control signal generator 105 and transmission packet generator 102 transmit the MU-RTS TXS TF, then provides a non-transmission interval of Short Interframe Space (SIFS), for example, and generate a transmission packet for STA4 based on the transmission data and/or control information for STA 4 after SIFS. The control information may be generated by, for example, control signal generator 105. Then, the AP transmits in the same transmission frequency band as the RU Allocation included in the User Info field for P2P link 1 in the MU-RTS TXS TF in radio transceiver 101 (S115 in FIG. 14). That is, P2P communication (S114 in FIG. 14) in P2P link 1 between STA 1 and STA 3 and DL transmission (S115 in FIG. 14) between AP and STA 4 are performed in the same transmission frequency band.

As described above, by performing control using the P2P ID, the AP can control both P2P communication and DL communication. For example, in a case where the AP is capable of using SR in both P2P communication and DL communication, the AP can transmit P2P communication and DL communication simultaneously in the same frequency band under the control of AP, thereby improving the throughput of the system.

Note that, in the example described above, an operation example using SR in a combination of P2P communication and DL communication has been described, but SR may be applied in a combination different from the combination of P2P communication and DL communication. For example, SR may be applied in a combination of P2P communication and P2P communication, in a combination of P2P communication and UL (Uplink) communication, or in a combination of three or more communications. For example, the three or more communications may be P2P communication in two mutually different P2P links and UL communication (or DL communication), or may be P2P communication in three mutually different P2P links. In this case, the MU-RTS TXS TF may include a plurality of User Info fields. For example, in the case of a combination of P2P communication and UL communication, the AID12 in each User Info field may designate the STA that is the transmission source of the UL communication and the P2P ID for performing P2P communication. Further, the RU Allocation in each User Info field may be the same value (that is, the same frequency band) to indicate the SR.

Further, an operation example in which SR is performed by the control of the AP has been described, but a method other than SR may be used. For example, in the arrangement example illustrated in FIG. 12, OFDMA may be performed between DL transmission from AP to STA 4 and P2P communication in P2P link 2. In this case, the same transmission and reception designation as in the MU-RTS TXS TF for P2P link 1 described above may be performed. For example, AID12 in the User Info field may be an AID (for example, AID = 4) assigned to P2P link 2. Further, after the non-transmission period of SIFS, a signal (a signal for DL communication) for STA 4 is transmitted in a transmission frequency band different from the RU Allocation included in the User Info field for P2P link 2 in the MU-RTS TXS TF. For example, OFDMA transmission can be performed by transmitting the signal for STA4 and the signal for P2P communication in P2P link 2 in different transmission frequency bands.

Note that, although an operation example in which OFDMA is used in a combination of P2P communication and DL communication has been described, OFDMA may be applied in a combination different from the combination of P2P communication and DL communication. For example, OFDMA may be applied in a combination of P2P communication and P2P communication, in a combination of P2P communication and UL communication, or in a combination of three or more communications. Alternatively, OFDMA and SR may be used in combination. For example, in a combination of P2P communications in three different P2P links (for example, P2P link A, P2P link B, and P2P link C), SR may be applied between the P2P communication in P2P link A and the P2P communication in P2P link B, and OFDMA may be applied between the P2P communication in P2P link A and the P2P communication in P2P link C.

Further, whether or not transmission from an STA included in a P2P link to an AP is possible may be designated for the STAincluded in the P2P link. For example, when SR is applied between two P2P links, it is possible to prevent a collision of transmission from an STA included in a P2P link to an AP by designating whether transmission is possible.

Whether or not transmission by the STA to the AP is possible may be designated, for example, using an unused bit in the User Info field or a combination of the Common Info field and the User Info field. For example, the unused area (for example, 3) in the TXOP Sharing Mode illustrated in FIG. 5 may be defined as indicating that only P2P communication is possible (transmission to the AP is not possible). That is, in a case of TXOP Sharing Mode = 3, it may be defined that the STA included in each P2P link is not capable of transmission to the AP. Further, for example, in a case of TXOP Sharing Mode = 2 (that is, P2P communication and transmission to AP are possible), it may be defined that only an STAincluded in a P2P link which is assigned to a User Info field at a specific position (for example, the beginning) in the User Info List is capable of transmission to the AP.

As described above, the control of the AP using the P2P ID makes it possible to individually designate P2P link 1 and P2P link 2 illustrated in FIG. 12. Furthermore, since it is possible to apply SR and OFDMA to operations between P2P communication and other communications (for example, DL communication, UL communication, and P2P communication), appropriate scheduling can be performed, and the throughput is improved.

Note that, in the above, an example in which a P2P link is registered for each pair of STAs has been described, but the present disclosure is not limited thereto. For example, a link including three or more STAs may be registered as one P2P link. For example, when STA 1, STA 2, and STA 3 illustrated in FIG. 12 perform transmission and reception in cooperation with each other, a P2P ID may be assigned to one P2P link that includes P2P link 1 and P2P link 2.

As described above, by registering a link including three or more STAs as one P2P link, it is possible to perform registration in accordance with the state of the P2P link.

Further, the AP may designate the primary channel of the P2P link. For example, the AP may designate the primary channels of two P2P links in which SR is possible as the same primary channel, and may designate the primary channels of two P2P links in which SR is not possible as different primary channels. Further, the AP may designate the primary channel of a P2P link for which SR is possible with DL communication as the same primary channel as that of DL communication, and may designate the primary channel of a P2P link for which SR is not possible with DL communication as a primary channel different from that of DL communication. Thus, in a P2P link where SR is possible, allocation to the same frequency band is facilitated.

Note that, in the communication control including the control of P2P communication, an operation example using MU-RTS TXS TF has been described, but the present disclosure is not limited thereto. In the communication control including the control of P2P communication, a signal (for example, a frame) other than the MU-RTS TXS TF may be used.

For example, a Basic TF may be used instead of the MU-RTS TXS TF. The Basic TF is, for example, a Trigger frame configured for Trigger Type subfield value = 0 as illustrated in FIG. 4. Note that the Trigger frame may be abbreviated as Trigger.

Further, as illustrated in FIG. 4, in the Buffer Status Report Poll (BSRP) TF configured for Trigger Type subfield value = 4, the P2P ID may be notified in the User Info field of the BSRP TF. In this case, for example, the STA (for example, STA 1 in FIG. 12) that has transmitted the P2P Register Request may notify the AP of the accumulation status of data in buffers of STAs included in the P2P link identified by the P2P ID designated for the AP. Thus, the AP can perform scheduling that takes into account the accumulation status of data for each STA included in a P2P link corresponding to a P2P ID, thereby improving throughput.

Further, as illustrated in FIG. 4, in the NDP Feedback Report Poll (NFRP) TF configured for Trigger Type subfield value = 7, the P2P ID may be notified in the User Info field of NFRP TF. In this case, for example, the STA that has transmitted the P2P Register Request may notify the AP of the reception quality of each STA included in the P2P link corresponding to the designated P2P ID. The reception quality to be notified may be represented by, for example, a reception power value, a path loss, or interference impact information. Thus, the AP can perform scheduling by taking into account the reception quality of each STA included in a P2P link corresponding to a P2P ID, thereby improving throughput.

Note that, the STA that responds to the Trigger (for example, the STA that responds to the Trigger and indicates the data accumulation status and/or the reception quality) is not limited to the STA that has transmitted the P2P Register Request. An STA included in the P2P link and that has not transmitted a P2P Register Request may respond to the Trigger. For example, a predetermined STA within the P2P link may perform a notification in response to the Trigger. As described above, by determining in advance the STA that indicates the AP, it is possible to avoid double transmission (or transmission overlap) in which the same information (for example, information on the data accumulation status and/or the reception quality) is transmitted by a plurality of STAs, and it is possible to prevent transmission from colliding due to double transmission and the same information from overlapping in the AP.

Further, information indicating whether each Trigger described above can be used in a P2P link (for example, whether a P2P ID can be designated in a User Info field) may be designated. The designation of whether the P2P link is to be used may be performed, for example, by the STA in a P2P Register Request. For example, information indicating whether a P2P ID can be designated in the User Info field included in each of the above-described MU-RTS TXS TF, Basic TF, BSRP TF, and NFRP TF may be designated by a P2P Register Request transmitted by an STA. For example, a P2P Register Request transmitted by an STA may designate that the P2P ID can be designated in the User Info field included in the MU-RTS TXS TF, and that the P2P ID cannot be designated in the User Info field included in each of the Basic TF, the BSRP TF, and the NFRP TF. Thus, the AP can determine the Trigger that is available for use in the P2P link.

Further, in a signal (for example, P2P Register Request) that an STA included in a P2P link transmits to an AP, information related to whether the AP controls P2P communication in the P2P link may be indicated to the AP in advance. The AP can determine whether control in a P2P link is possible through this indication, and AP can appropriately control P2P communication in the P2P link.

For example, the UL Target Receive Power in the User Info field illustrated in FIG. 6 includes information related to transmission power control in an STA(for example, an STA designated by AID12) corresponding to the User Info field. For example, the validity or invalidity (that is, whether transmission power control is possible) of the UL Target Receive Power in the User Info field illustrated in FIG. 6 for an STA included in a P2P link may be indicated to the AP by, for example, a P2P Register Request. For example, in a case where the transmission power control of an STA included in a P2P link is possible, the AP may designate OFDMA for P2P communication between two STAs and UL communication between an STA and the AP. Thus, it is possible to prevent a decoding error due to a reception power variation that occurs when an STA that cannot perform transmission power control receives a signal transmitted by OFDMA. Further, by preventing decoding errors, the throughput is improved.

Further, in the above, a control method using a P2P ID indicating a P2P link has been described, but the present disclosure is not limited thereto. STAs included in a P2P link may be identified by means other than the P2P ID.

For example, a combination of P2P links may be designated in some unused bits (for example, 2 bits) in the User Info field illustrated in FIGS. 6 and 8. Here, the combination of P2P links is, for example, a combination of P2P link 1 and P2P link 2 in the example of FIG. 12. For example, in the format of the User Info field illustrated in FIG. 6, 1 bit that is reserved may be used as a P2P link designation flag indicating whether to designate a P2P link. Further, in a case where the P2P link designation flag indicates that the P2P link is designated, the P2P link may be designated using 2 bits of an area (for example, UL HE-MCS in FIG. 6) that is unused in a case where the P2P link is designated, or may be designated using 2 bits of Reserved in the format illustrated in FIG. 8, for example. The case where the P2P link designation flag indicates that a P2P link is designated may be a case where the P2P link designation flag is valid.

Further, as a method other than the method using the User Info field described above, for example, two User Info fields may be used, and the STA included in the P2P link may be identified by AID12 of each User Info field. In this case, the Reserved (1 bit) in the first User Info field may be used as a P2P link designation flag indicating whether to designate a P2P link. Further, in a case where the P2P link designation flag is valid, the User Info field following the first User Info field may be configured to designate the second STA included in the P2P link. By using the Reserved (1 bit) in the first User Info field as a P2P link designation flag, it is possible to identify that the STA designated in the first User Info field and the STA designated in the second User Info field are STAs included in the P2P link.

### [Exemplary Configuration of STA Communicating with AP and STA (P2P)]

In the above, an operation example in which an STA having the configuration illustrated in FIG. 10 performs communication between the STA and an AP and P2P communication between STAs has been described. Communication between the STA and the AP will be referred to as "STA-AP communication" hereinafter. The STA that performs STA-AP communication and P2P communication between STAs corresponds to, for example, STA 1 illustrated in FIG. 12.

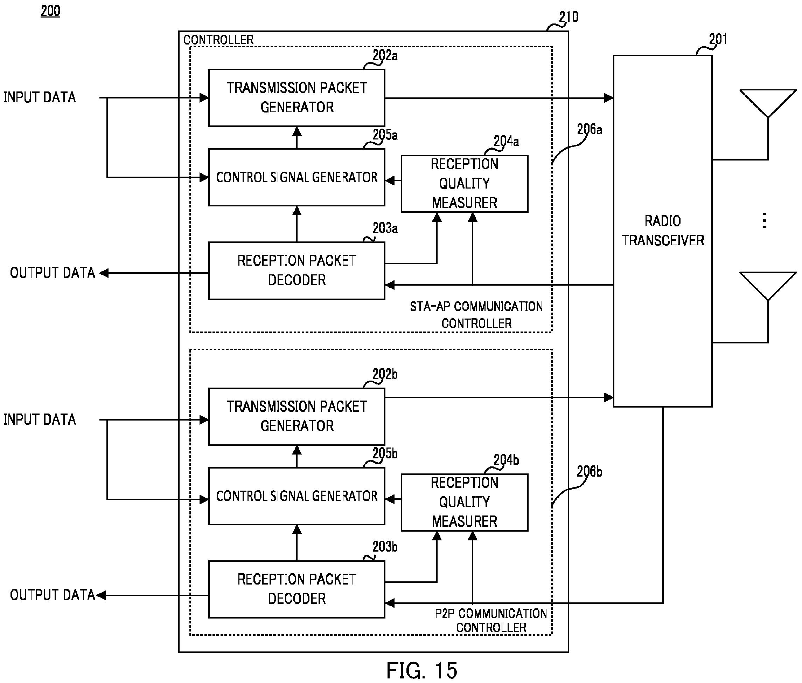

The STA may have a configuration in which STA-AP communication and P2P communication are separated. FIG. 15 is a diagram illustrating another exemplary configuration of an STA according to the present embodiment. For example, STA 200 illustrated in FIG. 15 includes STA-AP communication controller 206a, P2P communication controller 206b, and radio transceiver 201.

STA-AP communication controller 206a includes transmission packet generator 202a, control signal generator 205a, reception packet decoder 203a, and reception quality measurer 204a.

P2P communication controller 206b includes transmission packet generator 202b, control signal generator 205b, reception packet decoder 203b, and reception quality measurer 204b.

Note that, transmission packet generator 202a, control signal generator 205a, reception packet decoder 203a, and reception quality measurer 204a may be the same as transmission packet generator 202, control signal generator 205, reception packet decoder 203, and reception quality measurer 204, respectively, except for controlling the transmission and reception of signals related to STA-AP communication and not controlling the transmission and reception of signals related to P2P communication. Further, transmission packet generator 202b, control signal generator 205b, reception packet decoder 203b, and reception quality measurer 204b may be the same as transmission packet generator 202, control signal generator 205, reception packet decoder 203, and reception quality measurer 204, respectively, except for controlling the transmission and reception of signals related to P2P communication and not controlling the transmission and reception of signals related to STA-AP communication.

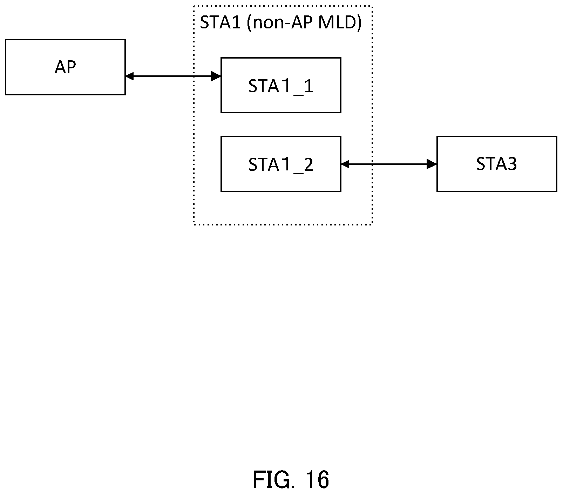

FIG. 16 is a block diagram illustrating another exemplary configuration of an STA according to the present embodiment. FIG. 16 illustrates an example in which STA 1 as in FIG. 12 associates with AP to perform STA-AP communication and performs P2P communication with STA 3. As illustrated in FIG. 16, STA 1 that performs STA-AP communication and P2P communication between STAs may be configured as a multi-link device (MLD). In this case, STA 1 may be provided with an STA (for example, STA 1_1) that associates with AP and an STA (for example, STA 1_2) that performs P2P communication with STA 3. STA 1 may be a non-AP MLD, and STA 1_1 and STA 1_2 may be configured to affiliate into STA 1 (non-AP MLD). For example, STA 1_1 and STA 1_2 may each be a non-AP STA, and STA 1 may be a non-AP MLD. In another example, STA 1_1 may be a non-AP STA, and STA 1_2 may be an AP (for example, an AP that communicates with STA 3). Further, STA 1_1 and STA 1_2 may have identification information (for example, address) of STAs that are different from each other. Further, in this case, STA 1_2 may be configured to affiliate with STA 1_1. Note that, STA 1 having an MLD configuration may be a communication apparatus that includes STA 1_1 and STA 1_2 in one apparatus. Alternatively, STA 1 having an MLD configuration may be regarded as a single communication apparatus logically. In a case where STA 1 is logically regarded as one communication apparatus, STA 1_1 and STA 1_2 included in STA 1 may be physically separate apparatuses. An STA (for example, STA 1) having an MLD configuration may be configured to be physically separate communication apparatuses and operate logically as a single apparatus.

Further, FIG. 16 illustrates an example in which the STA has an MLD configuration, but the AP may also have an MLD configuration. An AP having an MLD configuration may be referred to as an AP MLD. For example, the AP MLD may include an AP associated with STA 1 (for example, STA 1_1) and an AP associated with an STA different from STA 1 as different apparatuses (different apparatuses). In other words, the AP MLD may have identification information (for example, addresses) of a plurality of APs. In this case, the AP having the MLD configuration may be physically one communication apparatus. Alternatively, an AP having an MLD configuration may be physically constituted by a plurality of communication apparatuses and may operate logically as one communication apparatus.

Thus, individual configurations can be made for STA-AP communication and P2P communication. For example, in a configuration related to STA-AP communication (for example, STA-AP communication controller 206a in FIG. 15 or STA 1_1 in FIG. 16), it is possible to designate Capabilities and the like through association with an AP. Further, in a configuration related to P2P communication (for example, P2P communication controller 206b in FIG. 15 or STA 1_2 in FIG. 16), Capabilities and the like can be designated for a P2P link connection.

### [Format Example]

As described above, the STA transmits a P2P Register Request to the AP and receives a P2P Register Response from the AP. The formats of the P2P Register Request and the P2P Register Response are not particularly limited. For example, a new P2P frame may be added as a format including a P2P Register Request and a P2P Register Response.

For example, in FIG. 2, Type=01 and Subtype=0001 are indicated as Reserved, but Type=01 and Subtype=0001 may be defined as a P2P frame, and P2P Register Request and P2P Register Response may be defined as Types included in the P2P frame format.

The P2P Register Request frame may include the Capability of the P2P link. The Capability of a P2P link is an example of information indicating the capability related to communication in a P2P link. The Capability of the P2P link includes, for example, at least one of usable channel information, maximum and minimum transmission power values, information on whether transmission power control is possible, and information on whether Trigger usage is possible. In accordance with the Capability of the P2P link, the AP can perform control corresponding to the function (for example, Capability) of the STAincluded in the P2P link.

Note that an example in which the P2P Register Request frame includes the Capability of the P2P link has been described, but the present disclosure is not limited thereto. For example, the Capability of the P2P link or a part of the Capability of the P2P link may be included in a P2P frame different from the P2P Register Request and the P2P Register Response. In this case, a P2P frame including the Capability of the P2P link or a part of the Capability of the P2P link may be defined by a Type included in the format of the P2P frame. In other words, a P2P frame Type different from the P2P Register Request and the P2P Register Response may be defined as a P2P frame Type that includes at least a part of the Capability of the P2P link. Thus, for example, in a case where there is a change in at least a part of the Capability of the P2P link, only the relevant frame (P2P frame including at least a part of the Capability of the P2P link) can be indicated.

Further, the P2P Register Request frame or a frame including Capability of a P2P link may include an ID (for example, a MAC Address) of an STA included in the P2P link. Thus, for example, in FIG. 12, STA 1 indicates the IDs of STA 1 and STA 2 in the P2P Register Request for P2P link 2. This indication can prevent STA2 from re-registering P2P link 2 after STA 1 has transmitted the P2P Register Request for P2P link 2. Specifically, the P2P Register Request transmitted by STA 1 has already notified the AP of the IDs of STA 1 and STA 2 included in P2P link 2. In this case, the AP can determine that P2P link 2 is already registered when STA 2 registers P2P link 2. The time of P2P link 2 registration of STA 2 corresponds to, for example, the time when STA 2 transmits a P2P Register Request for P2P link 2.

In a case where the AP receives a P2P Register Request frame for a registered P2P link, the AP may indicate a P2P Register Response frame including a P2P ID assigned to the registered P2P link. Alternatively, when the AP receives the P2P Register Request frame for the registered P2P link, the AP may refuse the registration and return the P2P Register Response including information indicating that the P2P link is already registered. Note that the information indicating that the P2P link is registered may be represented by a Status code.

Thus, an STA whose registration of a P2P link is rejected does not transmit information on the rejected P2P link to the AP, thereby preventing control (for example, a TXOP request) for the same P2P link from overlapping.

Further, by using a P2P frame, for example, as illustrated in FIG. 15, an STA having a configuration for controlling STA-AP communication and a configuration for controlling P2P communication can aggregate, into the P2P frame, information related to P2P communication indicated between the respective configurations. Further, by using the P2P frame, for example, in a case where STA 1 is separated into STA 1-1 that performs STA-AP communication and STA 1-2 that performs P2P communication as illustrated in FIG. 16, information related to P2P communication indicated between STA 1-1 and STA 1-2 can be aggregated into the P2P frame.

Further, an example using a P2P frame, a P2P Register Request, and a P2P Register Response has been described, but the present disclosure is not limited thereto. Instead of the P2P Register Request and the P2P Register Response, an Association Request and an Association Response may be used, respectively. Alternatively, a part of the Association Request and a part of the Association Response may be used instead of the P2P Register Request and the P2P Register Response, respectively.

### <Example 2>

Hereinafter, an operation example in which the AP and the STA having the configuration described in Example 1 execute SR by referring to the transmission power mode of the STA included in the P2P link will be described as Example 2.

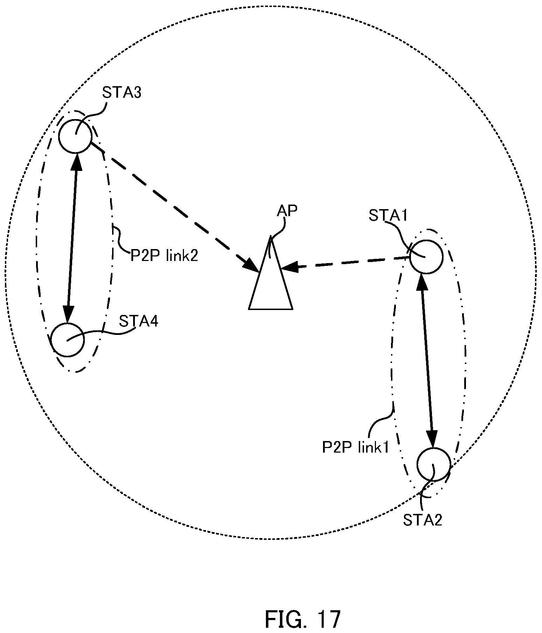

FIG. 17 is a diagram illustrating Arrangement Example 2 of the communication apparatus in the present embodiment. FIG. 17 illustrates one AP and four STAs 1 to 4.

In Example 2, as illustrated in FIG. 17, STA 1 and STA 3 associate with AP. Further, as illustrated in FIG. 17, the P2P link between STA 1 and STA2 is described as "P2P link 1," and the P2P link between STA 3 and STA 4 is described as "P2P link 2."

For example, an STA that performs P2P link registration may notify the AP of the transmission power mode according to the transmission power control of the STA included in the P2P link. The method for notifying the transmission power mode is not particularly limited, but for example, the STA may notify the transmission power mode using a P2P Register Request.

The transmission power mode may include a mode in which the transmission power is fixed (hereinafter referred to as "Static") and a mode in which the transmission power may be varied for each packet (hereinafter referred to as "Dynamic"). Note that, in Static, transmission power adjustment due to movement of the STA or the like may be allowed.

For example, in FIG. 17, when STA 1 and STA 2 included in P2P link 1 are in "Transmission Power Mode = Static," STA 1 indicates the AP that P2P link 1 is in "Transmission Power Mode = Static." In a case where at least one of STA 1 and STA 2 included in P2P link 1 is "Transmission power mode = Dynamic," STA 1 may notify AP that P2P link 1 is "Transmission power mode = Dynamic."

The AP indicates the STAs included in other P2P links of the transmission power mode for each P2P link. The STA to which the AP indicates the transmission power mode may be, for example, an STA that has registered a P2P link. The STA that has received the notification from the AP notifies another STA in the P2P link including itself of the transmission power mode of each P2P link indicated by the AP.

Each STA included in each P2P link determines whether the interference power of an interference signal received from a P2P link in the "transmission power mode = Static" is equal to or less than the allowable interference power for receiving a signal from a communication counterpart. This determination will be referred to as "SR availability determination" hereinafter. The STA notifies the AP of the result of the SR availability determination. Note that the timing of the SR availability determination is not particularly limited. For example, the SR availability determination may be executed after the transmission and reception of the P2P Register Request and the P2P Register Response, or it may be executed before data communication in the P2P link.

In the example of FIG. 17, the AP may notify STA 3 included in P2P link 2 of information indicating the transmission power mode of P2P link 1, and may notify STA 1 included in P2P link 1 of information indicating the transmission power mode of P2P link 2. STA 3 may notify STA 4 included in P2P link 2 of information indicating the transmission power mode of P2P link 1, and STA 1 may notify STA2 included in P2P link 1 of information indicating the transmission power mode of P2P link 2.

In a case where the transmission power mode of P2P link 1 is Static (in a case of "transmission power mode = Static"), STA 3 and STA 4 measure the interference power caused by an interference signal (for example, a packet) received from STAs (STA 1 and STA2) included in P2P link 1, and perform SR availability determination with respect to the interference power.

Note that STA3 and STA4 may each perform SR availability determination for the interference power caused by the interference signal received from STA 1 and for the interference power caused by the interference signal received from STA2. Hereinafter, the SR availability determination for the interference power due to the interference signal received from a certain STAx is described as the SR availability determination for STAx. In a case where the four determinations, which are the SR availability determination for STA 1 performed by STA3, the SR availability determination for STA2 performed by STA3, the SR availability determination for STA 1 performed by STA 4, and the SR availability determination for STA 2 performed by STA 4, are each a determination that SR is available, STA3 may notify AP that the result of the SR availability determination for P2P link 1 is that SR is available.

Further, in a case where the transmission power mode of P2P link 2 is Static (in a case of "transmission power mode = Static"), STA 1 and STA 2 may each perform SR availability determination for the interference power due to the interference signal received from STA 3 and for the interference power due to the interference signal received from STA 4, in the same manner as for P2P link 1. Then, based on the SR availability determination for STA 3 and STA 4 in each of STA 1 and STA 2, STA 1 may notify the AP of the determination result of the SR availability determination for P2P link 2.

Note that the notification of the transmission power mode from the AP to the STAs and the notification of the result of the SR availability determination from the STAs to the AP may be performed using a new format added as the format of the P2P frame.

Further, the STAs included in each P2P link may include a color (also referred to as BSS color) in the preamble of the packet to be transmitted as a value unique to the P2P link. The color is an example of information specifying a BSS. Further, the color is an example of information specifying a link for communication or information specifying a communication counterpart. For example, even if a plurality of communications interfere with each other on the same channel, the influence of the interference on each other may be ignored (or reduced) in a case where the colors of the packets to be transmitted and received are different. The color specific to the P2P link may be designated by the AP or may be defined in advance.

Thus, each STA included in the P2P link can determine the P2P link based on the color of the received packet, and can perform the SR determination of the corresponding P2P link based on the maximum reception power value with the same color. For example, in the case of the SR availability determination for STA 1 by STA 3 and the SR availability determination for STA 2 by STA 3, the SR availability determination can be performed without distinguishing between STA 1 and STA 2 since STA 1 and STA 2 have the same color. Further, by determining by color, the STA only needs to decode the preamble, thereby reducing the decoding process of the STA.

Further, the color of each P2P link may be designated in the P2P Register Response by the AP, for example.

The AP may transmit a Trigger frame (for example, MU-RTS TXS TF) that indicates SR or OFDMA transmission using the result of the SR availability determination indicated by an STA. For example, a Trigger frame (for example, MU-RTS TXS TF) may be transmitted by scheduler 106, control signal generator 105, transmission packet generator 102, and radio transceiver 101 illustrated in FIG. 11.

For example, in FIG. 17, when both the results of the SR availability determination for P2P link 1 indicated by STA 3 and the SR availability determination for P2P link 2 indicated by STA 1 indicate that SR is available, the AP may determine that SR transmission is possible because the influence of interference is small in each P2P link. In this case, the AP may notify STA 1 and STA 3 of an MU-RTS TXS TF that designates SR transmission between P2P link 1 and P2P link 2.

On the other hand, in a case where at least one of the result of the SR availability determination for P2P link 1 indicated by STA 3 and the result of the SR availability determination for P2P link 2 indicated by STA 1 indicates that SR is not possible, the AP determines that SR transmission is not possible because the influence of interference is large in the P2P link corresponding to the result indicating that SR is not possible. In this case, the AP may notify STA 1 and STA 3 of an MU-RTS TXS TF that designates OFDMA transmission between P2P link 1 and P2P link 2. Alternatively, in this case, the AP may designate the transmission method individually for STA 1 and STA 3. For example, in this case, the AP may individually notify STA 1 of the method for P2P communication in P2P link 1 and may individually notify STA 3 of the method for P2P communication in P2P link 2.

As described above, by using the transmission power mode in each P2P link and the result of the SR availability determination according to the transmission power mode, it is possible to execute SR between two P2P links without measuring the path losses between STAs included in a certain P2P link and STAs included in a P2P link different from the certain P2P link and without notifying the AP of the measured path losses, for example. That is, SR can be performed by a simpler determination method without measuring the path losses and notifying the path losses.

Note that, in the example described above, the transmission power mode is either Static or Dynamic, but the present disclosure is not limited thereto. A mode other than Static and Dynamic may be added to the transmission power mode.

For example, the transmission power mode of the P2P link in a case where each STA in the P2P link can be designated as Static and Dynamic may be "transmission power mode = select." Note that the designation of Static and Dynamic may be executed by the AP.

For example, in a case where a certain P2P link (hereinafter, referred to as "P2P link x") is indicated as "transmission power mode=select," the AP may designate the transmission power mode according to the P2P link around the AP.

For example, when a P2P link (hereinafter referred to as "P2P link y") capable of SR with P2P link x is present around the AP, the AP may designate the transmission mode of P2P link x as Static. Note that, whether a P2P link capable of SR with P2P link x exists or not may be determined based on the SR availability determination executed by the STA included in the P2P link around the AP.

By designating the transmission mode of P2P link x as Static, SR can be designated between P2P link x and P2P link y, thereby improving throughput.

Further, for example, the AP may designate the transmission mode of P2P link x as Dynamic in a case where there is no P2P link capable of SR with P2P link x around the AP. By designating the transmission mode of P2P link x as Dynamic, the STA included in P2P link x can select the optimal transmission power. Thus, it is possible to prevent a decrease in throughput caused by designating the transmission power mode as Static.

Note that, in a case where the transmission power mode of the STA is "select," a new format added as the format of the P2P frame may be used for the designation of the transmission power mode from the AP to the STA (designation of Static or Dynamic), or a part (for example, 1 bit) of an unused region of a Trigger frame (for example, MU-RTS TXS TF) may be assigned.

Further, in a case where each STA in the P2P link is an STA to which the AP can designate the transmission power value, the transmission power mode of the P2P link may be "transmission power mode = designated." In this case, information related to the amount of transmission power that can be corrected may be added to the result of the SR availability determination. The correctable amount of the transmission power may indicate, for example, the difference between the interference power measured by the STA and the interference power tolerance value of the STA.

In a case where the AP acquires information related to the correctable amount from STAs, the AP may control each transmission power in the P2P link within the range of the correctable amount for STA. Thus, the possibility of designating the SR increases, and the throughput using the SR is improved. Note that, in a case where "transmission power mode = designated," the STA may notify the AP of a range in which the transmission power of the STA is designatable. The range in which the transmission power of the STA can be designated may be represented, for example, by the maximum value and the minimum value of the transmission power of the STA.

In the above, a control example in a case where both the transmission power modes of the two P2P links are Static has been described, but the present disclosure is not limited thereto. For example, in a case where one of the two P2P links has "transmission power mode = Dynamic," the same control as in the case where both the transmission power modes of P2P links are Static may be applied.

For example, in FIG. 17, when P2P link 1 is "Transmission power mode = Dynamic" and P2P link 2 is "Transmission power mode = Static," STA 1 and STA 2 included in P2P link 1 may each perform SR availability determination and notify the AP of the determination result. For example, STA 1 may perform the SR availability determination based on Equations (1) and (2) using the reception power value measured in STA 1, the transmission power values of STA 3 and STA 4 indicated from AP, and the allowable interference power values of STA 3 and STA 4 during SR. Similarly, STA 2 may perform the SR availability determination based on Equations (1) and (2) using the reception power value measured in STA2, the transmission power values of STA 3 and STA4 indicated by AP, and the allowable interference power values of STA 3 and STA 4 during SR. Allowable transmission power candidate (n) = Transmission power value of STA(n) - Reception power value by STA(n) + Allowable interference power of STA(n) Allowable transmission power value = Minimum value of allowable transmission power candidate (n)

Note that, in Equation (1), n is an index that identifies an STA that is a target of the SR availability determination. For example, in the case where STA 1 and STA 2 perform the SR availability determination in the example of FIG. 17, the STAs that are the targets of the SR availability determination are STA 3 and STA 4, and thus, n = 3, 4. In a case where n = 3 in the example of FIG. 17, the transmission power value of STA(n) in Equation (1) indicates the transmission power value of STA 3, and the reception power value by STA(n) indicates the reception power value (also referred to as "reception power value of a signal received from STA(n)") measured in the STA (for example, STA 1 or STA 2) that has received a signal transmitted by STA 3. Further, in the example of FIG. 17, when n = 3, the allowable transmission power candidate (n) indicates a candidate for a transmission power value that is allowed for STA 3 by an STA (for example, STA 1 or STA 2) that has received the signal transmitted by STA 3.

In a case where the allowable transmission power candidate (n) is calculated for a plurality of STAs that are the target of the SR availability determination based on Equation (1), Equation (2) indicates that the minimum value of the allowable transmission power candidate (n) represents the transmission power value that is allowed for the plurality of STAs that are the target of the SR availability determination. The allowable transmission power value may be, in other words, the upper limit of the transmission power value. In the example of FIG. 17, Equation (2) indicates that the transmission power value, which is the minimum among the candidates for the transmission power value allowed for STA 3 and the candidates for the transmission power value allowed for STA 4, represents the transmission power value allowed for STA 3 and STA 4.

For example, a case where STA 1 calculates the allowable transmission power value based on Equations (1) and (2) for n=3 will be described. In this case, "Transmission power value of STA(n) - Reception power value of a signal received from STA(n)" in Equation (1) indicates the difference between the transmission power value of STA 3 and the reception power value of a signal transmitted from STA 3 and received by STA 1. In other words, "Transmission power value of STA(n) - Reception power value of a signal received from STA(n)" in Equation (1) corresponds to the path loss between STA 3 and STA 1. That is, Equation (1) indicates that the power value obtained by adding the path loss value between STA 3 and STA 1 and the allowable interference power of STA 3 is a candidate for the transmission power value allowed for STA 3. Further, in a case where STA 1 performs the SR availability determination for n=4, Equation (1) indicates that the power value obtained by adding the path loss value between STA4 and STA 1 and the allowable interference power of STA 4 is a candidate for the transmission power value allowed for STA 4.

STA 1 determines that the minimum value among the two allowable transmission power candidates is the allowable transmission power value of STA 1.

STA 2 determines, in the same manner as STA 1, that the minimum value among the candidate for the transmission power value allowed for STA 3 and the candidate for the transmission power value allowed for STA 4 is the allowable transmission power value for STA 2.

STA 1 and STA 2 may both determine that SR is possible when the allowable transmission power value is equal to or greater than the minimum transmission power at which the transmission destination STA can perform reception. For example, a determination may be made that SR is possible between P2P link 1 and P2P link 2 in a case where the allowable transmission power value of STA 1 is equal to or greater than the minimum transmission power at which STA 2 can perform reception, and the allowable transmission power value of STA 2 is equal to or greater than the minimum transmission power at which STA 1 can perform reception.

The AP designates a transmission method (for example, SR transmission or OFDMA transmission) for the P2P link based on the result of the SR availability determination. For example, the transmission method may be designated by notifying STA 1 and STA 3 of the MU-RTS TXS TF. Note that, in a case where SR transmission is designated by MU-RTS TXS TF, the transmission powers of the STAs (for example, STA 1 and STA 2) with "Transmission power mode = Dynamic" may be limited to be equal to or less than the allowable transmission power value.

For example, in a case where one of the two P2P links has a "transmission power mode = Dynamic," the same control as in a case where the transmission power modes of both P2P links are Static may be applied.

Note that an example of control in a case where one of the two P2P links is "Transmission power mode = Dynamic" has been described, but the P2P link that is "Transmission power mode = Dynamic" may be replaced with an AP-STA link. In other words, control similar to the control in a case where one of the two P2P links is "Transmission power mode = Dynamic" may be applied to the control between the P2P link and the AP-STA link. Thus, it is possible to designate that SR is performed even in a case where one P2P link is in "transmission power mode = Dynamic" or in a case of the AP-STA link, thereby improving the throughput.

### <Example 3>

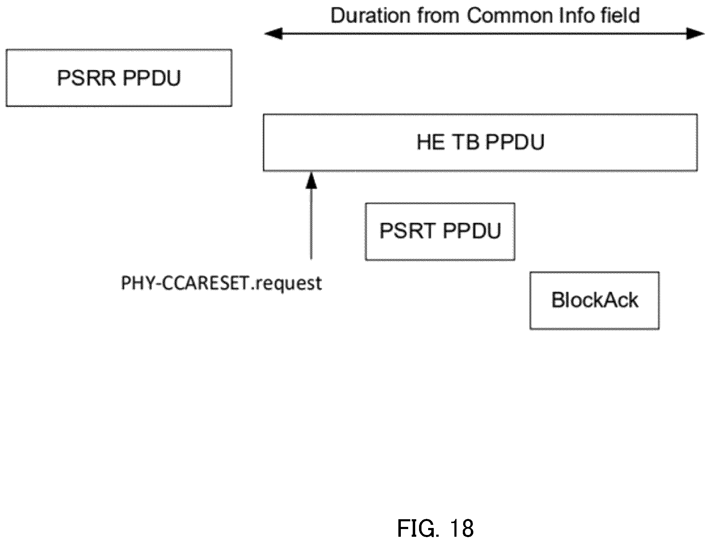

FIG. 18 illustrates an exemplary operation of SR in the present embodiment. In 11ax, as illustrated in FIG. 18, PSRR PPDU spatial reuse that performs determination of whether SR is possible and calculation of transmission power in the case of SR based on the reception power value of a Trigger frame (Parameterized Spatial Reuse Reception PLCP Protocol Data Unit (PSRR PPDU) in FIG. 18) is illustrated (see, for example, NPL 5). Note that PLCP is an abbreviation for Physical Layer Convergence Protocol. A PPDU may be referred to as a packet, a PHY packet, a PHY frame, a PHY signal, or a radio signal (radio transmission signal/radio reception signal). Further, when a PPDU mainly includes a data frame, the PPDU may be referred to as a data packet, transmission data/reception data, or a data signal.

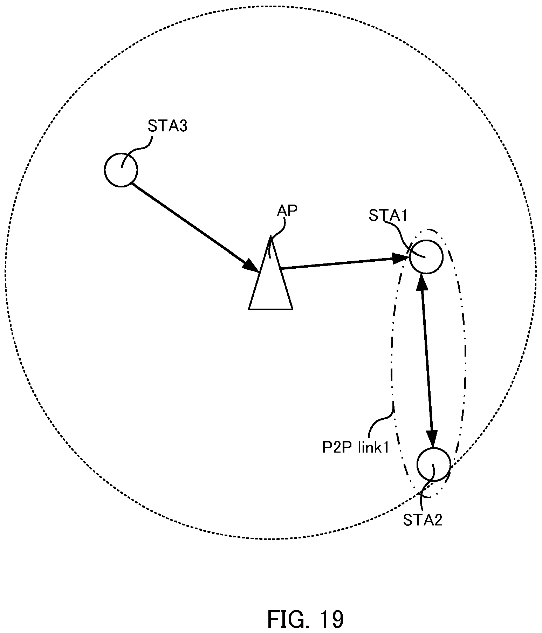

FIG. 19 is a diagram illustrating Arrangement Example 3 of the communication apparatus in the present embodiment. FIG. 19 illustrates one AP and three STAs 1 to 3. In FIG. 19, STA 1 and STA 3 associate with the AP. Further, in FIG. 19, STA 1 and STA 2 perform P2P communication.

Hereinafter, an example will be described in which the AP and STAs having the configuration described in Example 1 perform SR in the arrangement in which STA 1 and STA 3 are associated with the AP and STA 1 and STA 2 perform P2P communication, as illustrated in FIG. 19. Note that the P2P link between STA 1 and STA 2 is referred to as P2P link 1.

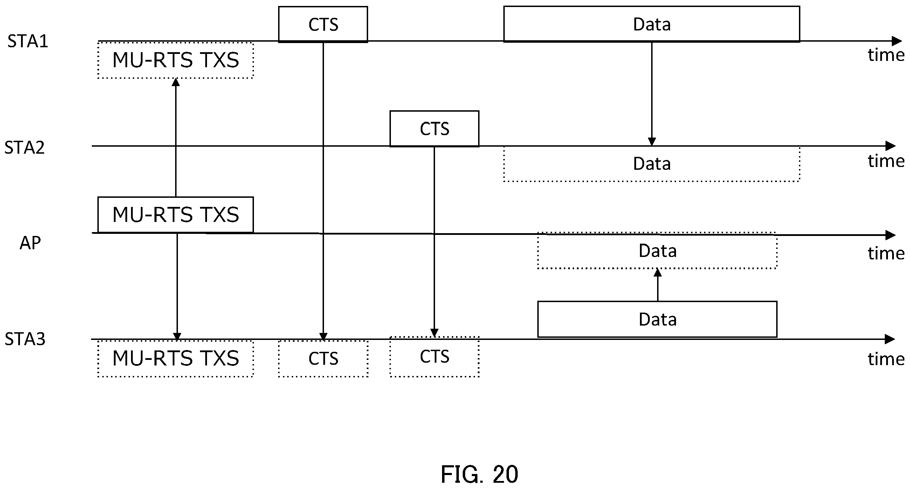

FIG. 20 illustrates a first exemplary operation in which SR is performed in the arrangement illustrated in FIG. 19. The horizontal axis in FIG. 20 represents the time axis. FIG. 20 illustrates operations in which each of the AP, STA 1, STA 2, and STA 3 transmits or receives a signal (for example, a frame or a packet). Note that the AP, STA 1, STA 2, and STA 3 in FIG. 20 are disposed as illustrated in FIG. 19.

As illustrated in the operation example of FIG. 20, an example in which SR is performed in the same manner as PSRR PPDU spatial reuse using the reception power values of transmission packets (for example, CTS (Clear To Send)) of STA 1 and STA 2 included in the P2P link will be described.

The AP and STA 1 perform P2P link registration after STA 1 associates with AP, in the same manner as in Example 1. For example, a color specific to the P2P link may be designated by the P2P Register Response.

The AP transmits a Trigger frame (for example, MU-RTS TXS TF) indicating P2P communication of P2P link 1 (see "MU-RTS TXS" in FIG. 20).

After transmitting CTS in response to the MU-RTS TXS TF, STA 1 and STA 2 perform P2P communication. For example, in FIG. 20, STA 1 transmits a CTS in response to the MU-RTS TXS TF, and STA 2, which has received the CTS transmitted by STA 1, transmits a CTS in response to the CTS transmitted by STA 1.

Note that, in FIG. 20, an example in which STA 2 transmits the CTS in response to the CTS from STA 1 is illustrated, but the present disclosure is not limited thereto. For example, STA 1 and STA 2 may transmit the CTSs simultaneously. Further, in FIG. 20, data transmission from STA 1 to STA2 is illustrated as P2P communication, but transmission from STA 2 to STA 1 may also be included.

After receiving the MU-RTS TXS TF, STA3 receives the CTSs transmitted by STA 1 and STA 2. STA 3 determines whether SR is possible and calculates the transmission power during SR based on the reception power values of the received CTSs.

For example, when SR is possible, SR is applied to the data transmission from STA 1 to STA 2 and the data transmission from STA 3 to the AP, as illustrated in FIG. 20. In other words, when SR is possible, the data transmission from STA 1 to STA 2 and the data transmission from STA 3 to the AP may be performed using the same radio resource (for example, the same transmission frequency band). Further, in this case, STA 3 may perform data transmission to the AP using the calculated transmission power.

As described above, the STA receives a CTS transmitted by another STA and determines the possibility of SR based on the reception power value of the CTS, thereby enabling SR and improving throughput.

Note that an operation example in which the determination of whether SR is possible is performed based on the reception power value of the CTS transmitted by the STA has been described, but the present disclosure is not limited thereto. The reception power value used in the determination of whether SR is possible may be a reception power value of a signal different from CTS. For example, the STA may transmit a Trigger.

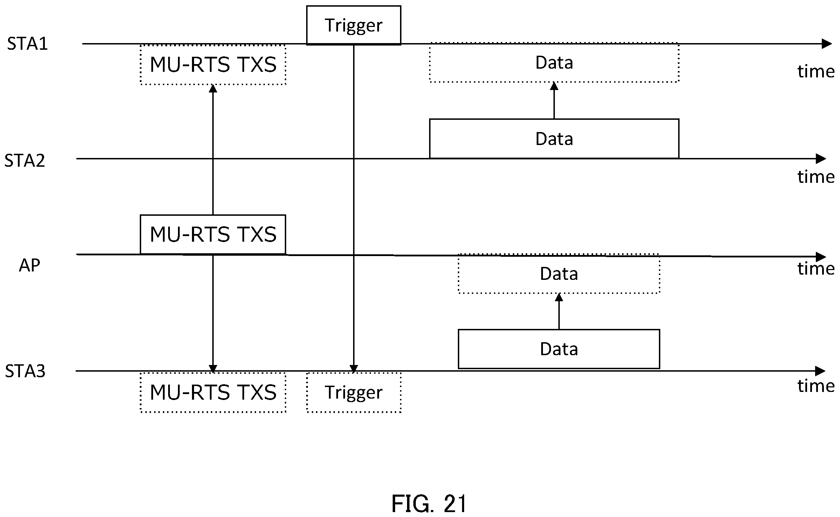

FIG. 21 illustrates a second exemplary operation in which SR is performed in the arrangement illustrated in FIG. 19. The horizontal axis in FIG. 21 represents the time axis. FIG. 21 illustrates operations in which each of AP, STA 1, STA 2, and STA 3 transmits or receives a signal (for example, a frame or a packet) in the same manner as in FIG. 20. Note that AP, STA 1, STA 2, and STA 3 in FIG. 21 are disposed as illustrated in FIG. 19.

For example, as illustrated in FIG. 21, STA 1 may transmit a Trigger. Thus, STA 3 can perform PSRR PPDU SR in the same manner as in the example illustrated in FIG. 18, based on the reception power value measured by receiving the Trigger transmitted by STA 1 and the reception power value measured by receiving a signal (Data transmitted from STA 2 to STA 1 in FIG. 21) transmitted by STA 2. Note that the signal transmitted by STA 2, which is a measurement target, is not particularly limited. For example, the signal transmitted by STA 2, which is the measurement target, may be data or control information.

Note that the condition under which the STA can transmit the Trigger may be limited. For example, the period during which the STA can transmit the Trigger may be limited to the TXOP period in which P2P communication is performed. Further, the STA that can transmit the Trigger may be limited to the STA that has performed the P2P Register Request. Further, the STA that can transmit the Trigger may be selected, for example, by negotiation with an STA included in a P2P link at the time of a P2P link connection. In this case, the STA that performs the P2P Register Request may notify the AP of information indicating an STA capable of transmitting a Trigger in the P2P Register Request. Note that, in this case, the STA that performed the P2P Register Request and the STA that can transmit the Trigger may be different from each other.

As described above, by the STA transmitting a Trigger, it is possible to perform PSRR PPDU SR, and the throughput is improved by performing SR.

Note that, in the above-described embodiments, examples of controlling SR and/or OFDMA between P2P links and examples of controlling SR and/or OFDMA between a P2P link and the AP-STA link have been described, but the present disclosure is not limited thereto. For example, control different from SR and OFDMA control may be executed between P2P links. Further, for example, control different from the control of SR and OFDMA may be executed between the P2P link and the AP-STA link.

Note that, in the above-described embodiment, an example of the configuration of a frame has been described, but the information to be notified is not limited to the information illustrated in the above-described embodiment, and, for example, other information may be added or at least a part of the defined information may be deleted.

Further, a frame, element, field, subfield, and the like in the above-described embodiment are areas (ranges or configurations) included in a signal, and are exemplary names of areas (ranges or configurations) in which information is configured. These names may be replaced with each other.

Further, the names of the frame, element, field, subfield, and the like in the above-described embodiments are merely examples, and the present disclosure is not limited to the above-described examples.

Further, although a description has been given based on the 11be format as a non-limiting example in each of the above-described embodiments, a format to which an embodiment of the present disclosure can be applied is not limited to the 11be format. An embodiment of the present disclosure may be applied to, for example, IEEE 802.11bd (Next Generation V2X (NGV)), which is a next generation standard from an on-vehicle standard of IEEE 802.11p.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A communication apparatus according to one exemplary embodiment of the present disclosure is a first communication apparatus and includes: control circuitry, which, in operation, controls communication in a first link between a second communication apparatus and a third communication apparatus that is connected to the first communication apparatus; and communication circuitry, which, in operation, transmits information indicating the communication in the first link to the third communication apparatus.

**In** one exemplary embodiment of the present disclosure, the information indicating the communication in the first link includes information specifying the second communication apparatus and the third communication apparatus that constitute the first link.

**In** one exemplary embodiment of the present disclosure, the communication circuitry receives, from the third communication apparatus, information requesting registration of the first link, and the control circuitry registers identification information identifying the first link.

**In** one exemplary embodiment of the present disclosure, the control circuitry assigns the identification information identifying the first link and identification information identifying the third communication apparatus from a common range configurable for the identification information identifying the first link and the identification information identifying the third communication apparatus.

**In** one exemplary embodiment of the present disclosure, the communication circuitry receives information indicating a capability related to the communication in the first link from the third communication apparatus.

**In** one exemplary embodiment of the present disclosure, the communication circuitry indicates the identification information identifying the first link in a same format as that of the identification information identifying the third communication apparatus.

In one exemplary embodiment of the present disclosure, the control circuitry designates a color individually for the first link.

In one exemplary embodiment of the present disclosure, the communication circuitry receives information related to transmission power in the first link.

In one exemplary embodiment of the present disclosure, the control circuitry controls, based on the information related to the transmission power in the first link, communication utilizing a same time-frequency resource between the first link and a second link different from the first link.

In one exemplary embodiment of the present disclosure, the control circuitry determines whether to perform communication utilizing a same time-frequency resource between the first link and a third link between a fourth communication apparatus connected to the first communication apparatus and the first communication apparatus.

In one exemplary embodiment of the present disclosure, the control circuitry determines whether to perform the communication utilizing the same time-frequency resource between the first link and the third link, based on reception power of a signal transmitted by the second communication apparatus and the third communication apparatus and received by the fourth communication apparatus.

A communication method according to one exemplary embodiment of the present disclosure is a method by a first communication apparatus and includes: controlling communication in a first link between a second communication apparatus and a third communication apparatus that is connected to the first communication apparatus; and transmitting information indicating the communication in the first link to the third communication apparatus.

The disclosure of Japanese Patent Application No. 2022-110552, filed on July 8, 2022, including the specification, drawings and abstract, is incorporated herein by reference in its entirety.

### Industrial Applicability

An exemplary embodiment of the present disclosure is useful for radio communication systems.

### Reference Signs List

100 AP
101, 201, 201a, 201b Radio transceiver
102, 202, 202a, 202b Transmission packet generator
103, 203, 203a, 203b Reception packet decoder
104, 204, 204a, 204b Reception quality measurer
105, 205, 205a, 205b Control signal generator
106 Scheduler
110, 210 Controller
206a STA-AP communication controller
206b P2P communication controller
200 STA

## Claims

1. A communication apparatus that is a first communication apparatus, the communication apparatus comprising:
control circuitry, which, in operation, controls communication in a first link between a second communication apparatus and a third communication apparatus that is connected to the first communication apparatus; and
communication circuitry, which, in operation, transmits information indicating the communication in the first link to the third communication apparatus.

2. The communication apparatus according to claim 1, wherein
the information indicating the communication in the first link includes information specifying the second communication apparatus and the third communication apparatus that constitute the first link.

3. The communication apparatus according to claim 1, wherein:
the communication circuitry receives, from the third communication apparatus, information requesting registration of the first link, and
the control circuitry registers identification information identifying the first link.

4. The communication apparatus according to claim 3, wherein
the control circuitry assigns the identification information identifying the first link and identification information identifying the third communication apparatus from a common range configurable for the identification information identifying the first link and the identification information identifying the third communication apparatus.

5. The communication apparatus according to claim 3, wherein
the communication circuitry receives information indicating a capability related to the communication in the first link from the third communication apparatus.

6. The communication apparatus according to claim 3, wherein
the communication circuitry indicates the identification information identifying the first link in a same format as that of the identification information identifying the third communication apparatus.

7. The communication apparatus according to claim 1, wherein
the control circuitry designates a color individually for the first link.

8. The communication apparatus according to claim 1, wherein
the communication circuitry receives information related to transmission power in the first link.

9. The communication apparatus according to claim 8, wherein
the control circuitry controls, based on the information related to the transmission power in the first link, communication utilizing a same time-frequency resource between the first link and a second link different from the first link.

10. The communication apparatus according to claim 1, wherein
the control circuitry determines whether to perform communication utilizing a same time-frequency resource between the first link and a third link between a fourth communication apparatus connected to the first communication apparatus and the first communication apparatus.

11. The communication apparatus according to claim 10, wherein
the control circuitry determines whether to perform the communication utilizing the same time-frequency resource between the first link and the third link, based on reception power of a signal transmitted by the second communication apparatus and the third communication apparatus and received by the fourth communication apparatus.

12. A communication method by a first communication apparatus, comprising:
controlling communication in a first link between a second communication apparatus and a third communication apparatus that is connected to the first communication apparatus; and
transmitting information indicating the communication in the first link to the third communication apparatus.
